# EUROPEAN PATENT APPLICATION

(11) **EP 4 608 006 A1**
(43) Date of publication of application: **27.08.2025**
(21) Application number: 23884857.6
(22) Date of filing: 30.10.2023
(51) Int. Cl.: H04W 36/00

(54) **INFORMATION TRANSMISSION METHOD AND APPARATUS**

(30) Priority: 03.11.2022 CN 202211371257
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN); HU, Xingxing, Shenzhen, Guangdong 518129 (CN)
(74) Representative: Goddar, Heinz J.
(86) International application number: PCT/CN2023/127811
(87) International publication number: WO 2024/093927

(57) **Abstract**

Embodiments of this application disclose an information transmission method and apparatus. The method includes: A master node obtains a conditional primary secondary cell addition/change CPAC configuration set from a stored context of a terminal device, where the CPAC configuration set includes one or more CPAC configurations associated with a secondary cell group SCG failure; and the master node sends the CPAC configuration set to a secondary node. In embodiments of this application, a cause of the SCG failure can be accurately analyzed based on a CPAC configuration, to optimize a mobility parameter related to the SCG failure, reduce a probability of the SCG failure, and improve quality of dual connectivity communication performed by the terminal device.

## Description

This application claims priority to Chinese Patent Application No. 202211371257.9, filed with the China National Intellectual Property Administration on November 3, 2022, and entitled "INFORMATION TRANSMISSION METHOD AND APPARATUS", which is incorporated herein by reference in its entirety.

### TECHNICAL FIELD

This application relates to the field of communication technologies, and specifically, to an information transmission method and apparatus.

### BACKGROUND

In a secondary cell group (secondary cell group, SCG) failure scenario, if transmission of a master cell group (master cell group, MCG) is not suspended, a terminal device reports SCG failure information to a master node (master node, MN). The MN determines, based on the received SCG failure information, to indicate the UE to retain, change, or release a secondary node (secondary node, SN). In addition, the SCG failure information records SCG failure problem information. The MN sends, based on an SN configuration and an SCG failure type, the SCG failure information to a faulty node (for example, a source SN or a candidate SN) that may cause an SCG failure. The faulty node may perform final root cause analysis based on the SCG failure information and perform SN mobility parameter optimization. However, currently, application scenarios of performing root cause analysis based on SCG failure information are limited, and root cause analysis requirements of an increasing quantity of SCG failure scenarios in a network cannot be met.

### SUMMARY

This application provides an information transmission method and apparatus, to accurately analyze a cause of an SCG failure, so as to optimize a mobility parameter related to the SCG failure, and reduce a probability of the SCG failure.

According to a first aspect, this application discloses an information transmission method. The information transmission method may be applied to a master node, or may be applied to a module (for example, a chip) in the master node, or may be applied to a logical module or software that can implement all or some functions of the master node. The following uses an example in which the method is applied to the master node for description. The information transmission method includes: The master node obtains a conditional primary secondary cell addition/change CPAC configuration set from a stored context of a terminal device, where the CPAC configuration set includes one or more CPAC configurations associated with a secondary cell group SCG failure; and the master node sends the CPAC configuration set to a secondary node.

In a possible implementation, the SCG failure is an SCG failure that occurs after the terminal device successfully executes a CPAC procedure and releases a CPAC configuration.

In this implementation, in a CPAC application scenario, the master node may store, in the context of the terminal device, the CPAC configuration set configured for the terminal device. After the terminal device detects that the SCG failure occurs and notifies the master node, the master node may send, to the secondary node, the CPAC configuration obtained from the context of the terminal device as a part of SCG failure information. In this way, the secondary node can accurately analyze a specific cause of the SCG failure based on the received CPAC configuration. For example, it may be analyzed, based on the CPAC configuration, whether the SCG failure is caused by an inappropriate trigger condition. In this way, a mobility parameter related to the SCG failure can be appropriately adjusted, and a CPAC configuration or the like on a network side can be optimized, to reduce a probability of the SCG failure, and improve quality of dual connectivity communication performed by the terminal device.

In a possible implementation, the method further includes: The master node receives the SCG failure information from the terminal device, where the SCG failure information indicates the SCG failure. That the master node obtains a conditional primary secondary cell addition/change CPAC configuration set from a local storage includes: The master node determines the CPAC configuration set in a local storage of the context of the terminal device based on an identifier of the terminal device.

In this implementation, the context of the terminal device that stores the CPAC configuration set configured for the terminal device is associated with and bound to the identifier of the terminal device. After the SCG failure occurs, the terminal device may send the SCG failure information to the master node to notify the master node that the SCG failure occurs. After receiving the SCG failure information of the terminal device, the master node may retrieve the context of the terminal device based on the identifier of the terminal device, to find the CPAC configuration set. In this solution, the CPAC configuration set is stored in the context of the terminal device, so that the master node can quickly find the CPAC configuration set based on the identifier of the terminal device, to quickly respond to the SCG failure, so as to improve efficiency of analyzing a cause of the SCG failure.

In a possible implementation, the CPAC configuration set includes a first CPAC configuration, the first CPAC configuration is obtained by the master node from a first message from a source secondary node, and the first message is a secondary node change request message sent by the source secondary node.

In this implementation, the master node may obtain the first CPAC configuration from the secondary node change request message sent by the source secondary node and store the first CPAC configuration, so that after the SCG failure occurs subsequently, the master node can invoke the first CPAC configuration in a timely manner to analyze the cause of the SCG failure.

In a possible implementation, the CPAC configuration set includes a second CPAC configuration, the second CPAC configuration is obtained by the master node from a second message from the source secondary node, the second message is a response message sent by the source secondary node based on a secondary node modification request of the master node before the master node sends an RRC configuration to the terminal device, and the RRC configuration indicates the CPAC configuration of the terminal device.

In this implementation, the master node may actively request to change the secondary node configured for the terminal device. The source secondary node changes, based on the request, the CPAC configuration configured for the terminal device, and then sends a changed CPAC configuration to the master node. The master node obtains and stores the changed CPAC configuration (namely, the second CPAC configuration), so that after the SCG failure occurs subsequently, the master node can invoke the second CPAC configuration in a timely manner to analyze the cause of the SCG failure.

In a possible implementation, the CPAC configuration set includes a third CPAC configuration, the third CPAC configuration is obtained by the master node from a third message from the source secondary node, the third message is a CPAC configuration change request message initiated by the source secondary node after the master node sends the RRC configuration to the terminal device, and the RRC configuration indicates the CPAC configuration of the terminal device.

In this implementation, after the master node sends the RRC configuration to the terminal device, the source secondary node may further request to change the CPAC configuration configured for the terminal device, and send a changed CPAC configuration (namely, the third CPAC configuration) to the master node. The master node obtains and stores the third CPAC configuration, so that after the SCG failure occurs subsequently, the master node can invoke the third CPAC configuration in a timely manner to analyze the cause of the SCG failure.

In a possible implementation, the SCG failure information includes first time information and/or second time information. The first time information indicates a time period from a time at which the terminal device receives a primary secondary cell addition/change PA/ PC command to a time at which the terminal device detects the SCG failure, and the second time information indicates a time period from a time at which the terminal device receives a conditional primary secondary cell addition/change CPAC command to the time at which the terminal device detects the SCG failure.

In this implementation, for a scenario in which both a PA/PC and a CPAC occur, the SCG failure information sent by the terminal device to the master node further includes corresponding time information. In this way, the master node or a faulty secondary node can accurately analyze a specific cause of the SCG failure based on the received time information. For example, it may be analyzed, based on the time information, whether the SCG failure is caused by an inappropriate time for triggering execution of the PA/PC or triggering execution of the CPAC by the terminal device in the two procedures in the scenario in which both the PA/PC and the CPAC occur. In this way, the mobility parameter related to the SCG failure can be appropriately adjusted, and a PA/PC configuration, the CPAC configuration, or the like on the network side can be optimized, to reduce the probability of the SCG failure.

In a possible implementation, the method further includes: The master node sends the first time information and/or the second time information to the secondary node, so that the secondary node can analyze the specific cause of the SCG failure based on the received time information.

According to a second aspect, this application discloses an information transmission method. The information transmission method may be applied to a secondary node, or may be applied to a module (for example, a chip) in the secondary node, or may be applied to a logical module or software that can implement all or some functions of the secondary node. The following uses an example in which the method is applied to the secondary node for description. The information transmission method includes: The secondary node receives a conditional primary secondary cell addition/change CPAC configuration set from a master node, where the CPAC configuration set includes one or more CPAC configurations associated with a secondary cell group SCG failure; and the secondary node adjusts a mobility parameter based on the CPAC configuration set.

In a possible implementation, the SCG failure is an SCG failure that occurs after the terminal device successfully executes a CPAC procedure and releases a CPAC configuration.

In this implementation, in a CPAC application scenario, after the SCG failure occurs, the secondary node may obtain, from the master node, the CPAC configuration associated with the SCG failure, so that the secondary node can accurately analyze a specific cause of the SCG failure based on the received CPAC configuration. For example, it may be analyzed, based on the CPAC configuration, whether the SCG failure is caused by an inappropriate trigger condition, to appropriately adjust the mobility parameter, and optimize a CPAC configuration or the like on a network side, so as to reduce a probability of the SCG failure, and improve quality of dual connectivity communication performed by the terminal device.

In a possible implementation, the method further includes: The secondary node receives first time information and/or second time information from the master node, where the first time information indicates a time period from a time at which the terminal device receives a primary secondary cell addition/change PAC command to a time at which the terminal device detects the SCG failure, and the second time information indicates a time period from a time at which the terminal device receives a conditional primary secondary cell addition/change CPAC command to the time at which the terminal device detects the SCG failure. That the secondary node adjusts a mobility parameter based on the CPAC configuration set includes: The secondary node adjusts the mobility parameter based on the CPAC configuration set and the first time information and/or the second time information.

In this implementation, as described, in addition to the CPAC configuration set, SCG failure information received by the secondary node from the master node further includes corresponding time information (applicable to a scenario in which both a PA/PC and a CPAC occur). In this way, the secondary node can analyze the specific cause of the SCG failure based on the received CPAC configuration set and time information, to more accurately find the cause of the SCG failure, appropriately adjust the mobility parameter, and optimize the CPAC configuration or the like on the network side, so as to reduce the probability of the SCG failure, and improve the quality of the dual connectivity communication performed by the terminal device.

According to a third aspect, this application discloses an information transmission method. The information transmission method may be applied to a terminal device, or may be applied to a module (for example, a chip) in the terminal device, or may be applied to a logical module or software that can implement all or some functions of the terminal device. The following uses an example in which the method is applied to the terminal device for description. The information transmission method includes: The terminal device UE determines that a secondary cell group SCG failure occurs; and the terminal device sends SCG failure information to a master node, where the SCG failure information includes first time information and/or second time information, the first time information indicates a time period from a time at which the UE receives a primary secondary cell addition/change PA/PC command to a time at which the UE detects the SCG failure, and the second time information indicates a time period from a time at which the terminal device receives a conditional primary secondary cell addition/change CPAC command to the time at which the terminal device detects the SCG failure; and the SCG failure information is used to adjust a mobility parameter.

In a possible implementation, the SCG failure is an SCG failure that occurs before a CPAC is configured and execution of the CPAC is triggered after the UE successfully executes a PA/PC procedure; or the SCG failure is an SCG failure that occurs after execution of a PA/PC procedure is configured and the execution of the PA/PC fails or succeeds before a CPAC is configured and execution of the CPAC is triggered.

In this implementation, in a scenario in which both the PA/PC and the CPAC occur, the terminal device may record the first time information and/or the second time information, and send the time information to a network side after the SCG failure occurs. In this way, the network side can analyze a specific cause of the SCG failure based on the received time information. For example, it may be analyzed, based on the time information, whether the SCG failure is caused by an inappropriate time for triggering execution of the PA/PC or triggering execution of the CPAC by the terminal device in the two procedures in the scenario in which both the PA/PC and the CPAC occur. According to this solution, the cause of the SCG failure can be more accurately and effectively analyzed, so that the mobility parameter can be appropriately adjusted, and a PA/PC configuration, a CPAC configuration, or the like on the network side can be optimized, to reduce a probability of the SCG failure, and improve quality of dual connectivity communication performed by the terminal device.

In a possible implementation, the SCG failure information further includes a conditional primary secondary cell addition/change CPAC configuration set, and the CPAC configuration set includes one or more CPAC configurations associated with the SCG failure.

In this implementation, after the SCG failure occurs, the terminal device may further send the CPAC configuration set to the network side. In this way, the network side can analyze the specific cause of the SCG failure based on the received CPAC configuration. For example, it may be analyzed, based on the CPAC configuration, whether the SCG failure is caused by an inappropriate trigger condition. In this way, the mobility parameter can be appropriately adjusted, and the CPAC configuration or the like on the network side can be optimized, to reduce the probability of the SCG failure.

According to a fourth aspect, this application discloses an information transmission apparatus. The information transmission apparatus is a master node, or a module (for example, a chip) in the master node, or a logical module or software that can implement all or some functions of the master node. The information transmission apparatus includes a unit configured to perform the method according to any implementation of the first aspect.

According to a fifth aspect, this application discloses an information transmission apparatus. The information transmission apparatus is a secondary node, or a module (for example, a chip) in the secondary node, or a logical module or software that can implement all or some functions of the secondary node. The information transmission apparatus includes a unit configured to perform the method according to any implementation of the second aspect.

According to a sixth aspect, this application discloses an information transmission apparatus. The information transmission apparatus is a terminal device, or a module (for example, a chip) in the terminal device, or a logical module or software that can implement all or some functions of the terminal device. The information transmission apparatus includes a unit configured to perform the method according to any implementation of the third aspect.

According to a seventh aspect, this application discloses an information transmission apparatus. The apparatus includes a processor, a memory, and a transceiver. The transceiver is configured to receive information from a communication apparatus other than the information transmission apparatus, and output information to the communication apparatus other than the information transmission apparatus. The processor invokes a computer program stored in the memory, so that the information transmission apparatus implements the method according to any implementation of the first aspect.

According to an eighth aspect, this application discloses an information transmission apparatus. The apparatus includes a processor, a memory, and a transceiver. The transceiver is configured to receive information from a communication apparatus other than the information transmission apparatus, and output information to the communication apparatus other than the information transmission apparatus. The processor invokes a computer program stored in the memory, so that the information transmission apparatus implements the method according to any implementation of the second aspect.

According to a ninth aspect, this application discloses an information transmission apparatus. The apparatus includes a processor, a memory, and a transceiver. The transceiver is configured to receive information from a communication apparatus other than the information transmission apparatus, and output information to the communication apparatus other than the information transmission apparatus. The processor invokes a computer program stored in the memory, so that the information transmission apparatus implements the method according to any implementation of the third aspect.

According to a tenth aspect, this application discloses a communication system. The communication system includes a master node and a secondary node. The master node is configured to perform the method according to any implementation of the first aspect, and the secondary node is configured to perform the method according to any implementation of the second aspect.

In a possible implementation, the communication system further includes a terminal device, and the terminal device is configured to perform the method according to any implementation of the third aspect.

According to an eleventh aspect, this application discloses a computer-readable storage medium. The computer-readable storage medium stores a computer program or computer instructions. When the computer program or the computer instructions are run by a processor, the information transmission method according to any implementation disclosed in the foregoing aspects is implemented.

According to a twelfth aspect, this application discloses a chip, including a processor, configured to execute a program stored in a memory. When the program is executed by the processor, the chip is enabled to perform the information transmission method according to any implementation disclosed in the foregoing aspects.

In a possible implementation, the memory is located outside the chip.

According to a thirteenth aspect, this application discloses a computer program product. The computer program product includes computer program code, and when the computer program code is run by a processor, the information transmission method according to any implementation disclosed in the foregoing aspects is performed.

The solutions provided in the fourth aspect to the thirteenth aspect are used to implement or cooperate to implement the method correspondingly provided in the first aspect, the second aspect, or the third aspect, and therefore, can achieve beneficial effects the same as or corresponding to those of the corresponding method in the first aspect, the second aspect, or the third aspect. Details are not described herein again.

### BRIEF DESCRIPTION OF DRAWINGS

FIG. 1 is a diagram of a network architecture according to an embodiment of this application;
FIG. 2 is a diagram of an NR protocol stack according to an embodiment of this application;
FIG. 3 is an architectural diagram of a control plane in an MR-DC scenario according to an embodiment of this application;
FIG. 3A is a schematic flowchart of an information transmission method according to an embodiment of this application;
FIG. 4 to FIG. 8 are schematic flowcharts of other information transmission methods according to embodiments of this application; and
FIG. 9 to FIG. 12 are diagrams of structures of information transmission apparatuses according to embodiments of this application.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner like "at least one piece (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" is used, including a case of a single a, a single b, a single c, a combination of a and b, a combination of a and c, a combination of b and c, or a combination of a, b, and c. In embodiments of this application, A/B may represent A or B.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The following describes embodiments of this application by using examples with reference to the accompanying drawings.

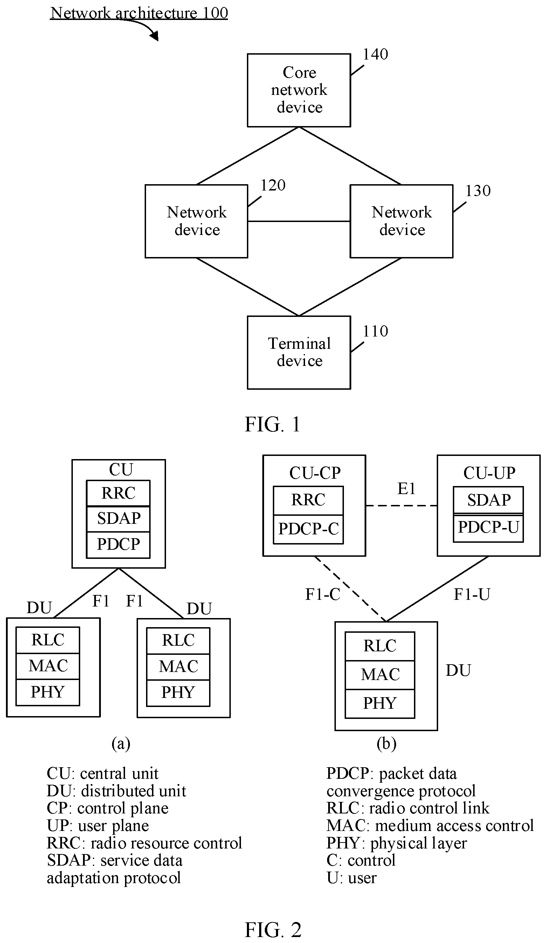

FIG. 1 shows an example of a network architecture 100 to which an embodiment of this application is applicable. The network architecture 100 includes a terminal device 110, a network device 120, a network device 130, and a core network device 140.

The terminal device 110 may communicate with the network device 120 and the network device 130. The network device 120 and the network device 130 are radio access network (radio access network, RAN) devices. The terminal device 110 accesses the core network device 140 through the network device 120 and the network device 130.

The terminal device (the terminal device 110) may also be referred to as user equipment (user equipment, UE), a subscriber station (subscriber station, STA), a mobile station (mobile station, MS), a mobile terminal (mobile terminal, MT), and the like, and is a device that provides data connectivity for a user. The terminal device may have a wireless receiving and sending function. For example, the terminal device may be a handheld terminal, a very small aperture terminal (very small aperture terminal, VSAT), a notebook computer, customer premise equipment (customer premise equipment, CPE), a notebook computer, a subscriber unit (subscriber unit), a cellular phone (cellular phone), a smartphone (smartphone), a wireless data card, a personal digital assistant (personal digital assistant, PDA) computer, a tablet computer, a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a flying device (for example, an intelligent robot, a hot air balloon, an uncrewed aerial vehicle, or an airplane), or another device that can access a network. A specific technology and a specific device form used by the terminal device are not limited in this application. The terminal device may have one or more subscriber identity module (subscriber identity module, SIM) cards.

The network device (the network device 120 or the network device 130) may be a device that provides radio access for the terminal device, for example, may be a base station or another RAN device. For example, the network device may be a next generation NodeB (next generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a Wi-Fi access point (access point, AP), or an integrated access and backhaul (integrated access and backhaul, IAB) device in a new radio (new radio, NR) system.

In addition, in a network structure, the network device may include a central unit (central unit, CU), a distributed unit (distributed unit, DU), or a RAN device including a CU and a DU. Some protocol-layer functions of a network device including a CU and a DU are centrally controlled by the CU, some or all of the remaining protocol-layer functions are distributed in the DU, and the CU controls the DU in a centralized manner. For ease of understanding, FIG. 2 is an example diagram of an NR protocol stack.

As shown in (a) in FIG. 2, a CU is deployed with a radio resource control (radio resource control, RRC) layer, a service data adaptation protocol (service data adaptation protocol, SDAP) layer, and a packet data convergence protocol (packet data convergence protocol, PDCP) layer. A DU is deployed with a radio link control (radio link control, RLC) layer, a medium access control (media access control, MAC) layer, and a physical layer (physical layer, PHY). Therefore, the CU has processing capabilities of the RRC layer, the SDAP layer, and the PDCP layer. The DU has processing capabilities of the RLC layer, the MAC layer, and the PHY layer.

It should be understood that the foregoing function division is merely an example, and does not constitute a limitation on the CU and the DU. In other words, there may be another function division manner between the CU and the DU. This is not limited herein.

In a possible implementation, functions of the CU may be implemented by using one entity or different entities. As shown in (b) in FIG. 2, the functions of the CU may be further divided. For example, a control plane (control plane, CP) and a user plane (user plane, UP) in the CU are separated, that is, a control plane CU (CU-CP) and a user plane CU (CU-UP) are obtained. For example, the CU-CP and the CU-UP may be implemented by different functional entities. The CU-CP and the CU-UP may be coupled to the DU to jointly implement a function of an access network device.

In a possible manner, the CU-CP is responsible for a control plane function, and is mainly responsible for an RRC function and a PDCP-C function. The PDCP-C is mainly responsible for encryption and decryption, integrity protection, data transmission, and the like of control plane data. The CU-UP is responsible for a user plane function, and is mainly responsible for an SDAP function and a PDCP-U function. The SDAP is mainly responsible for processing data of a core network and mapping a data flow (flow) to a bearer. The PDCP-U is mainly responsible for encryption and decryption, integrity protection, header compression, sequence number maintenance, data transmission, and the like of a data plane. The CU-CP and the CU-UP may be connected through an E1 interface. The CU-CP may be connected to the core network device through a next generation (next generation, NG) interface. The DU and the CU-CP may be connected through an F1-C interface. The DU and the CU-UP may be connected through an F1-U interface. In another possible implementation, the PDCP-C is also in the CU-UP.

In a possible real-time manner, the CU-CP may be divided into a CU-CP 1 and a CU-CP 2. The CU-CP 1 includes various radio resource management functions, and the CU-CP 2 includes only the PDCP-C function (namely, a basic function of control plane signaling at the PDCP layer).

The core network device (the core network device 140) may be, for example, a mobility management entity (mobility management entity, MME) and/or a serving gateway (serving gateway, S-GW) in a core network of a 4th generation (4th generation, 4G) communication system, namely, an evolved packet core (evolved packet core, EPC) network, or may be one or more of an access and mobility management function (access and mobility management function, AMF) network element, a session management function (session management function, SMF) network element, or a user plane function (user plane function, UPF) network element in a 5G core (5G core, 5GC) network. The descriptions herein are merely an example, and do not constitute a limitation on embodiments of this application.

In a possible implementation, the terminal device 110 may be connected to the network device 120 and the network device 130 through a Uu interface. The network device 120 may be connected to the network device 130 through an Xn interface. The network device 120 may be connected to the core network device 140 through an NG interface. The network device 130 may also be connected to the core network device 140 through an NG interface.

It should be noted that the network architecture 100 shown in FIG. 1 is not limited to including only the terminal device, the network device, and the core network shown in the figure, and may further include another terminal device, network device, and core network device that are not shown in the figure. Details are not listed one by one in this application.

The network architecture 100 may be applied to a long term evolution (long term evolution, LTE) system, or may be applied to an NR system, and a communication system evolved after 5G like a 6th generation (6th generation, 6G). The network architecture 100 may be applied to a plurality of communication scenarios such as a non-terrestrial network (non-terrestrial network, NTN) system and a narrow band internet of things (narrow band-internet of things, NB-IoT) system.

For ease of understanding of the technical solutions provided in this application, the following first describes related technologies in embodiments of this application.

### 1. Multi-radio dual connectivity (multi-radio dual connectivity, MR-DC)

In a wireless network, one terminal device may communicate with a plurality of network devices, that is, dual connectivity (dual connectivity, DC) is performed, which is also referred to as MR-DC. For example, in the network architecture shown in FIG. 1, the terminal device 110 may communicate with the network device 120 and the network device 130. In other words, connections between the terminal device 110 and the network device 120 and between the terminal device 110 and the network device 130 shown in FIG. 1 are multi-radio dual connectivity.

The plurality of network devices that communicate with the terminal device may be network devices that belong to a same radio access technology (radio access technology, RAT). For example, both the network device 120 and the network device 130 are LTE network devices such as eNBs, or both are NR network devices such as gNBs. Alternatively, the plurality of network devices may be network devices of different RATs. For example, the network device 120 is an eNB, and the network device 130 is a gNB.

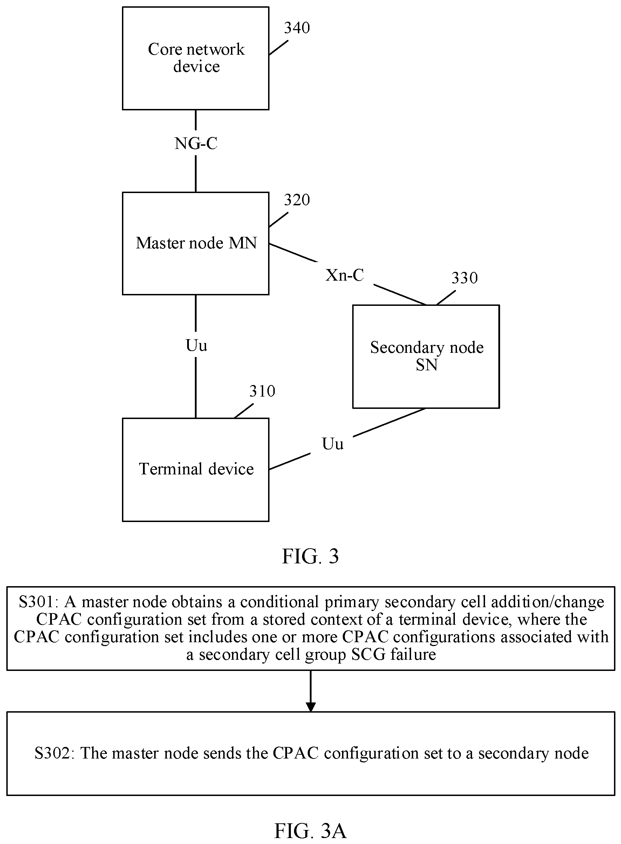

A network side may provide a communication service for the terminal device by using resources of the plurality of network devices, to provide high-rate transmission for the terminal device. In a dual connectivity scenario, a network device that has control plane signaling exchange with a core network is referred to as a master node (master node, MN), and another network device is referred to as a secondary node (secondary node, SN). In addition, the MN and/or the SN may have a user plane connection to the core network. For ease of understanding, FIG. 3 is an example of an architectural diagram of a control plane in an MR-DC scenario. As shown in FIG. 3, a terminal device 310 is separately connected to an MN 320 and an SN 330 through Uu interfaces. The MN 320 is connected to a core network device 340 through an NG-C interface. "C" in the NG-C interface indicates control. In other words, the NG-C interface is a control plane interface. The MN 320 is connected to the SN 330 through an Xn-C interface. Similarly, the Xn-C interface is a control plane interface. The Xn-C interface supports the following functions: Xn interface management, mobility management of the terminal device, including context transmission and RAN paging, and dual connectivity. For example, the terminal device 310 may be the terminal device 110 shown in FIG. 1, the MN 320 may be the network device 120 shown in FIG. 1, and the SN may be the network device 130 shown in FIG. 1.

The MR-DC includes various types of DC, such as evolved universal terrestrial radio access new radio dual connectivity (E-UTRA New Radio Dual Connectivity, EN-DC), next generation radio access network (NG Radio Access Network, NG-RAN) evolved universal terrestrial radio access-new radio (Evolved Universal Terrestrial Radio Access-New Radio, E-UTRA-NR) dual connectivity (NG-RAN E-UTRA-NR Dual Connectivity, NGEN-DC), NR-E-UTRA dual connectivity (NR-E-UTRA Dual Connectivity, NE-DC), and NR-dual connectivity (New Radio-Dual Connectivity, NR-DC).

In the EN-DC, the MN is an LTE network device connected to an EPC, and the SN is an NR network device. The EN-DC is also referred to as a non-standalone architecture (non-standalone architecture, NSA).

In the NGEN-DC, the MN is an LTE network device NG-eNB connected to a 5G core network 5GC, and the SN is an NR network device.

In the NE-DC, the MN is an NR network device connected to the 5GC, and the SN is an LTE network device.

In the NR-DC, the MN is an NR network device connected to the 5GC, and the SN is an NR network device.

In a possible implementation, a user plane of the SN may be connected to a core network connected to the MN. For example, the core network may directly send data to the terminal device through the SN.

In the MR-DC scenario, the MN has a primary cell (primary cell, PCell), and the SN has a primary secondary cell (primary secondary cell, PSCell). The primary cell is a cell that is deployed at a dominant frequency and in which a terminal device initiates an initial connection establishment procedure or a connection reestablishment procedure, or a cell indicated as a primary cell in a handover procedure. The primary secondary cell is a cell in which a terminal device initiates a random access procedure in the SN, or a cell in which a terminal device skips a random access procedure in an SN change procedure and initiates data transmission, or a cell in which random access is initiated in a synchronous reconfiguration procedure in the SN.

The terminal device may receive services of a plurality of cells through one network device at the same time. A serving cell group (including one or more cells) provided by the MN for the terminal device may be referred to as a master cell group (master cell group, MCG). A serving cell group (including one or more cells) provided by the SN for the terminal device is referred to as a secondary cell group (secondary cell group, SCG). If the MCG includes only one cell, the cell is a primary cell PCell of the terminal device. If the SCG includes only one cell, the cell is a primary secondary cell PSCell of the terminal device. To normalize various nouns in NR, the PCell and the PSCell are collectively referred to as special cells (special cells, SpCells). If the MCG or the SCG includes a plurality of cells, a cell other than the SpCell is referred to as a secondary cell (secondary cell, SCell). The secondary cell is a cell working on a secondary carrier. Once an RRC connection is established, the secondary cell may be configured to provide additional radio resources. When the MCG or the SCG includes a plurality of cells, carrier aggregation (carrier aggregation, CA) may be performed on SCells and SpCells in each cell group, to jointly provide a transmission resource for the terminal device.

In addition, in a dual connectivity scenario, the MN and the SN each have an RRC entity, and may generate an RRC message. For example, as shown in FIG. 3, an RRC message may be directly transmitted between the SN and the terminal device through a signaling radio bearer 3 (signaling radio bearer 3, SRB3). Alternatively, an RRC message transmitted between the SN and the terminal device may be forwarded by the MN.

It may be understood that embodiments of this application are described by using the dual connectivity as an example, and may be extended to a multi-connectivity scenario in a specific implementation. In the multi-connectivity scenario, there may be one MCG and at least two SCGs, or there may be a plurality of MCGs and a plurality of SCGs. This is not limited in embodiments of this application.

### 2. Primary secondary cell addition/change (PSCell Addition/Change, PA/PC)

In MR-DC, a network side triggers a PSCell addition. The PSCell addition is triggered by an MN. In addition, due to mobility of a terminal device, the network side triggers a PSCell change (to be specific, the network side indicates the terminal device to hand over from one PSCell to another PSCell). The PSCell change may be triggered by the MN, or may be triggered by an SN. For example, the network side may determine, based on a measurement result reported by the terminal device, that signal quality of one PSCell becomes worse and signal quality of another PSCell becomes better, and indicate the terminal device to perform a PSCell change. The PSCell change may be a handover from a cell of one SN to a cell of another SN, or may be a handover from a cell of one SN to another cell of the SN.

### 3. Conditional primary secondary cell addition/change (conditional PSCell addition/change, CPAC)

In MR-DC, a CPAC technology can be derived by combining a conditional handover (conditional handover, CHO) technology with a PA/PC technology. Specifically, the CPAC is to apply the CHO technology to a PSCell addition or change. It can be learned that there are two mechanisms for a network side to configure a terminal device to perform a PSCell addition or change. One is a common PSCell addition or change (namely, the PA/PC), and the other is a conditional PSCell addition or change (namely, the CPAC).

The common PSCell addition or change may also be referred to as a PSCell addition or change for short. In this mechanism, the network side may specify a target PSCell, and after receiving a configuration from the network side, the terminal device immediately executes a PSCell addition or change procedure with the target PSCell.

The CPAC includes a conditional primary secondary cell addition (conditional PSCell addition, CPA) and a conditional primary secondary cell change (conditional PSCell change, CPC). In this mechanism, similar to the CHO, the network side may prepare one or more candidate PSCells in advance, and then send a CPA configuration or a CPC configuration to the terminal device, where the CPA configuration and the CPC configuration may be collectively referred to as a CPAC configuration. The CPAC configuration includes an SCG configuration of the one or more candidate PSCells and a corresponding trigger condition. After the terminal device receives the CPAC configuration, when the one or more candidate PSCells meet the corresponding trigger condition, the terminal device may determine one of the candidate PSCells as a target PSCell, and execute an access procedure with the target PSCell. The procedure may be referred to as a CPA or CPC procedure of the candidate PSCell.

The following separately describes the two implementation processes, namely, the CPA and the CPC.

### (1) CPA implementation process

When no SN is configured for the terminal device, that is, there is no source SN (source secondary node, S-SN), a CPA of the terminal device is triggered by an MN. Specifically, the MN may send an SN addition request to one or more candidate SNs. If a candidate SN allows access, the candidate SN reserves a radio resource for the terminal device and feeds back an acknowledge (Acknowledge, ACK) message to the MN. The MN sends a message including a CPA configuration to the terminal device. The message includes radio air interface configurations and trigger conditions of all the candidate SNs. The terminal device feeds back an RRC reconfiguration complete message to the MN, to indicate that the CPA configuration is successfully received. However, after receiving the message including the CPA configuration, the terminal device first continuously determines whether a target PSCell meets a trigger condition. When the terminal device detects that a candidate PSCell meets a corresponding trigger condition, the terminal device feeds back an RRC reconfiguration complete message to the MN, to indicate the selected candidate PSCell to the MN. The MN feeds back the RRC reconfiguration complete message to an SN corresponding to the selected candidate PSCell. The MN sends an SN release message to other candidate SNs, to indicate these SNs to release reserved resources and buffered data. The terminal device performs random access to the selected candidate PSCell.

### (2) CPC implementation process

If an SN is configured for the terminal device, and the SN is a source SN, a CPC of the terminal device may be triggered by an MN, or may be triggered by the source SN. The CPC triggered by the source SN is used as an example for description. If the CPC is triggered by the source secondary node, the source SN sends an SN change request to the MN, to indicate one or more candidate PSCells and a trigger condition of the PSCell. The MN sends an SN addition request to candidate SNs corresponding to the one or more candidate PSCells. If a candidate SN allows access, the candidate SN reserves a radio resource for the terminal device and feeds back an ACK message to the MN. The MN sends a message including a CPC configuration to the terminal device. The message includes an SCG configuration of the one or more candidate PSCells and the corresponding trigger condition. The terminal device feeds back an RRC reconfiguration complete message to the MN, to indicate that the CPC configuration is successfully received. After receiving the message including the CPC configuration, the terminal device continuously determines whether a target PSCell meets a trigger condition. When the terminal device detects that a candidate PSCell meets a corresponding trigger condition, the terminal device feeds back an RRC reconfiguration complete message to the MN, to indicate the selected candidate PSCell to the MN. The MN feeds back the RRC reconfiguration complete message to an SN corresponding to the selected candidate PSCell. The MN sends an SN release message to the source SN to indicate the source SN to stop data transmission with the terminal device, and performs data transfer with the SN corresponding to the selected candidate PSCell. The MN sends an SN release message to other candidate SNs, to indicate these candidate SNs to release reserved resources and buffered data. The terminal device performs random access to the selected candidate PSCell.

It may be understood that, that the PSCell addition (PA) is triggered by the MN, or the CPA is triggered by the MN means that an entire procedure of implementing the PA or the CPA is triggered by the MN. In the procedure of implementing the CPA, after determining that a candidate PSCell meets a trigger condition, the terminal device triggers execution of the CPA. The CPA triggering in this case is different from the triggering of the CPA procedure described above. In the subsequent descriptions, triggering of execution of the CPA (or CPA triggering) is a conditional PSCell addition operation triggered after the terminal device determines that a candidate PSCell meets a trigger condition. Triggering of the CPA procedure (or CPA procedure triggering) is an operation of triggering the entire CPA procedure by the MN.

Similarly, that the PSCell change (PC) is triggered by the MN or the SN, or the CPC is triggered by the MN or the SN means that an entire procedure of implementing the PC or the CPC is triggered by the MN or the SN. In the procedure of implementing the CPC, after determining that a candidate PSCell meets a trigger condition, the terminal device triggers execution of the CPC. The CPC triggering in this case is different from the triggering of the CPC procedure described above. In the subsequent descriptions, triggering of execution of the CPC (or CPC triggering) is a conditional PSCell change operation triggered after the terminal device determines that a candidate PSCell meets a trigger condition. Triggering of the CPC procedure (or CPC procedure triggering) is an operation of triggering the entire CPC procedure by the MN or the SN.

In addition, when the CPA and the CPC are collectively referred to as a CPAC, in the subsequent descriptions, triggering of execution of the CPAC (or CPAC triggering) is a conditional PSCell addition/change operation triggered after the terminal device determines that a candidate PSCell meets a trigger condition. Triggering of the CPAC procedure (or CPAC procedure triggering) is an operation of triggering the entire CPAC procedure by the MN or the SN.

### 4. SCG failure

SCG failure scenarios may include the following scenarios: an SCG radio link failure (radio link failure, RLF), an SCG beam failure during SCG deactivation, an SN addition/change failure, an SCG configuration failure, a CPAC configuration failure, an SCG RRC integrity check failure, continuous uplink listen before talk (listen before talk, LBT) failures on a PSCell, backhaul RLF indication received from an SCG in integrated access and backhaul mobile communication, and a CPA/CPC execution failure.

After an SCG failure occurs, if transmission of a master cell group MCG is not suspended, a terminal device reports SCG failure information (SCG failure information) to an MN. The MN indicates, based on the received SCG failure information, the terminal device to retain, change, or release an SN. The SCG failure information records related information of the SCG failure. If the MN can perform initial analysis, and a related node that causes a PSCell change/addition failure is an SN, for example, which may be a source SN or a target SN, the MN forwards the SCG failure information together with an analysis result to the related SN. Otherwise, the MN forwards the SCG failure information to a previous serving SN. For example, if the SCG failure is an SCG RLF, the previous serving SN is a serving SN in which the RLF occurs. If the SCG failure is an SN addition/change failure, the previous serving SN is the source SN. In a possible implementation, after receiving the SCG failure information, the previous serving SN may use an SCG failure transfer procedure response, to notify the MN that the SN is not a faulty SN that causes the SCG failure.

In embodiments of this application, the faulty node is a master node that causes the SCG failure or a secondary node that causes the SCG failure (referred to as a faulty SN for short). The faulty SN may be, for example, the source SN, the target SN, or the serving SN in which the RLF occurs. After receiving the SCG failure information, the faulty node may analyze a cause of the SCG failure based on the SCG failure information, and perform SN-related mobility parameter optimization.

The SCG failure information may include one or more of the following content: an SCG failure type, an available-SCG measurement result, information about a source primary secondary cell of a previous PSCell change, and information about a failed primary secondary cell. The information about the failed primary secondary cell may be information about a primary secondary cell on which the SCG failure is detected, or may be information about a target primary secondary cell on which a PSCell change or addition fails.

### 5. SN mobility information (SN mobility information) information element

The SN mobility information information element includes information related to a primary secondary cell change (PSCell change), for example, includes identifier information of a target PSCell and/or configuration information of the target PSCell.

In a possible implementation, when a source SN initiates a PSCell change, an SN change request (SN change required) message sent by the source SN to an MN may include the SN mobility information information element.

In a possible implementation, the MN sends, to the SN, a message including an SCG failure information report (SCG failure information Report). When receiving the message, the SN may learn that the PSCell change fails. If the PSCell change procedure is triggered by the source SN, the SCG failure information report may include the SN mobility information information element.

Based on the foregoing descriptions, SCG failure information may be used to effectively analyze a cause of an SCG failure. However, existing SCG failure information records only related information (for example, a PA configuration or a PC configuration) in a PA/PC procedure, and does not record related information (for example, a CPAC configuration or a time at which a terminal device receives the CPAC configuration) in a CPAC procedure. In addition, in the CPAC procedure, after execution of a CPAC is successfully triggered, the terminal device releases the CPAC configuration. If an SCG failure occurs after the terminal device releases the CPC configuration, the UE cannot include CPAC configuration information in the SCG failure information and report the SCG failure information to a network side. Therefore, after the SCG failure occurs in the CPAC scenario, a cause of the SCG failure cannot be more effectively analyzed based only on the existing SCG failure information. Therefore, this application provides an information transmission method and apparatus, to accurately analyze a cause of an SCG failure, and reduce a probability of the SCG failure.

For example, FIG. 3A is a schematic flowchart of an information transmission method according to an embodiment of this application. The method includes but is not limited to the following steps.

S301: A master node obtains a conditional primary secondary cell addition/change CPAC configuration set from a stored context of a terminal device, where the CPAC configuration set includes one or more CPAC configurations associated with a secondary cell group SCG failure.

S302: The master node sends the CPAC configuration set to a secondary node.

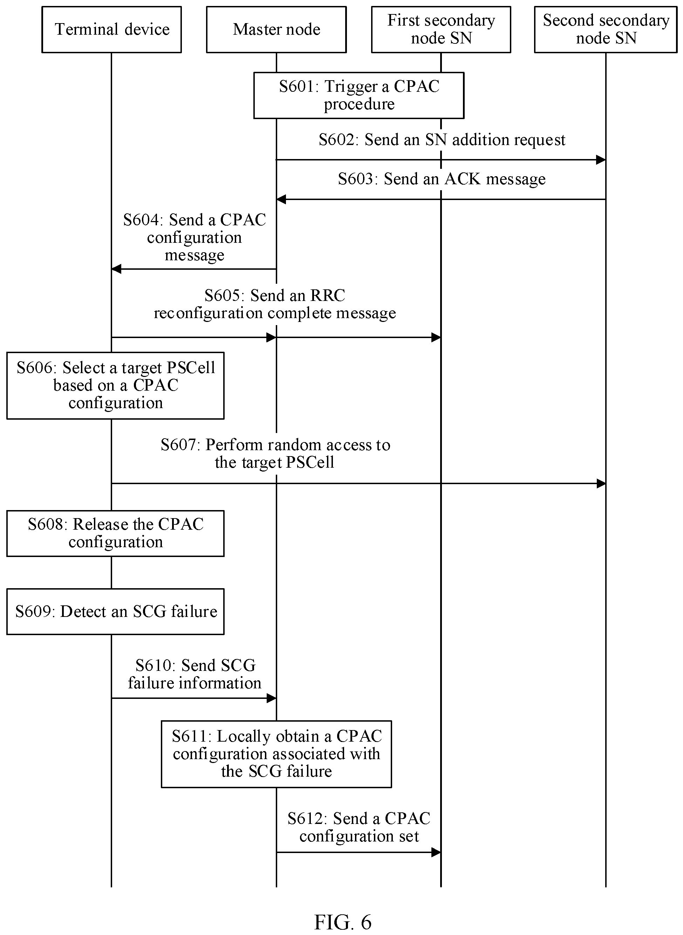

In this application, in a CPAC application scenario, the master node may store, in the context (context) corresponding to the terminal device, the CPAC configuration set configured for the terminal device. In this way, after the terminal device detects that the SCG failure occurs and sends SCG failure information to the master node to notify the master node that the SCG failure occurs, the master node can obtain the corresponding CPAC configuration set from the locally stored context of the terminal device. In addition, the CPAC configuration set is sent to a faulty SN, so that the faulty SN can more accurately analyze a cause of the SCG failure based on the CPAC configuration set, to better implement SN mobility robustness optimization, and reduce a probability of the SCG failure. For specific implementations of the method, refer to the following example descriptions in FIG. 6 to FIG. 8. Details are not described herein.

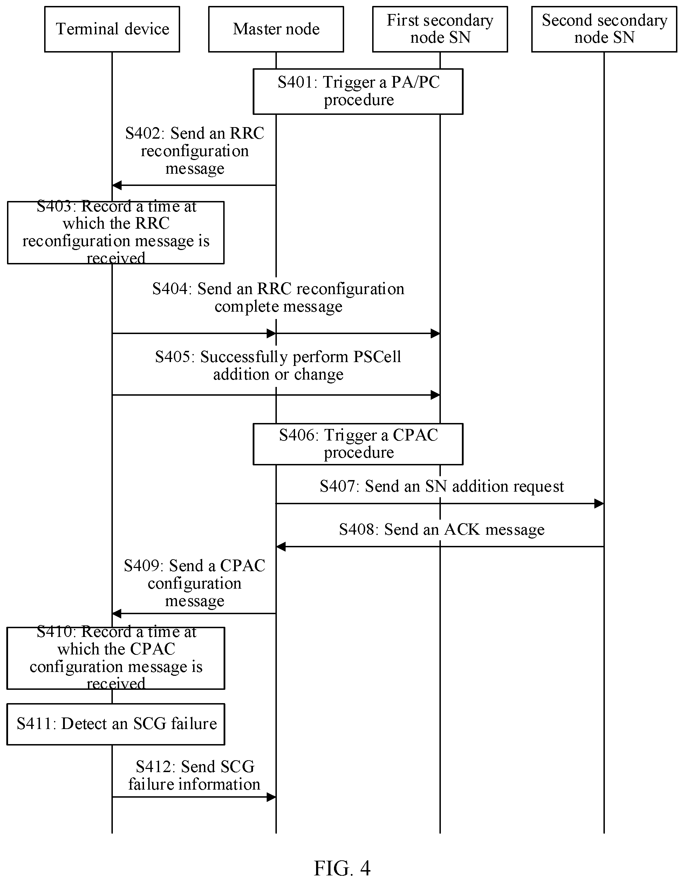

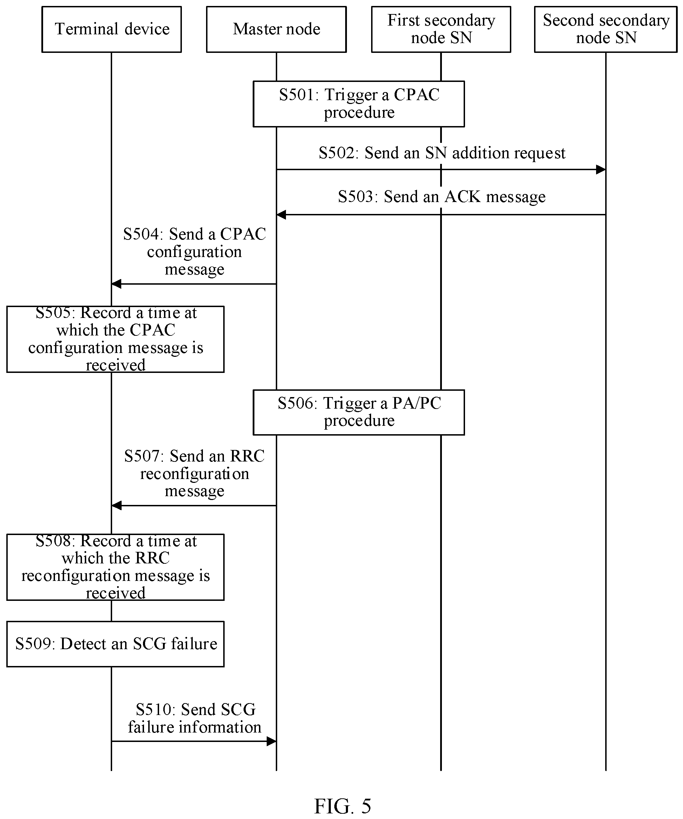

In another possible implementation, in a scenario in which both a PA/PC and a CPAC occur, triggering of a PA/PC procedure and triggering of a CPAC procedure may affect each other in this scenario, causing an SCG failure. Therefore, corresponding time information needs to be recorded for analyzing a cause of the SCG failure. Therefore, the terminal device may obtain first time information and/or second time information. The first time information indicates a time period from a time at which the terminal device receives a primary secondary cell addition/change PA/PC command to a time at which the terminal device detects the SCG failure. The second time information indicates a time period from a time at which the terminal device receives a conditional primary secondary cell addition/change CPAC command to the time at which the terminal device detects the SCG failure. Then, after detecting that the SCG failure occurs, the terminal device sends the first time information and/or the second time information to the master node as a part of the SCG failure information. Optionally, the master node may further send the first time information and/or the second time information to the faulty SN. In this way, the master node or the faulty SN can more accurately analyze the cause of the SCG failure based on the first time information and/or the second time information, to optimize mobility robustness, reduce the probability of the SCG failure, and improve quality of dual connectivity communication performed by the terminal device. For specific implementations of the method, refer to the following corresponding example descriptions in FIG. 6 to FIG. 8. Details are not described herein. For specific implementations of this embodiment, refer to the following descriptions in FIG. 4 and FIG. 5. Details are not described herein.

The SCG failure that occurs in the foregoing scenario in which both the PA/PC and the CPAC occur includes the following two cases.

In a first case, the SCG failure in the scenario in which both the PA/PC and the CPAC occur is: an SCG failure that occurs before a CPC configuration is received after the terminal device successfully executes the PA/PC procedure, and a CPC is triggered.

In a second case, the SCG failure in the scenario in which both the PA/PC and the CPAC occur is: an SCG failure that occurs after a PA indication is received from a network side after the terminal device receives a CPA configuration and before a CPA is triggered, and execution of the PA fails or execution of the PA succeeds; or an SCG failure that occurs after a PC indication is received from a network side after the terminal device receives a CPC configuration and before a CPC is triggered, and execution of the PC fails or execution of the PC succeeds.

The following separately describes the information transmission method provided in this embodiment of this application in the two cases. In method embodiments provided in this application, an example in which a terminal device and a network device are execution bodies is used for description, and the network device includes an MN or a candidate SN. It may be understood that the communication method may alternatively be performed by an apparatus, for example, a chip, used in the terminal device or the network device.

For example, FIG. 4 is a schematic flowchart of an information transmission method according to an embodiment of this application in the first case. In FIG. 4, the information transmission method provided in this embodiment of this application includes but is not limited to the following steps.

S401: The MN or the SN triggers a PA/PC procedure.

In this embodiment of this application, the PA procedure is a PSCell addition (PSCell Addition) procedure, and the PC procedure is a PSCell change (PSCell Change) procedure. When no SN is configured for the terminal device, the PSCell addition procedure is triggered. When an SN is configured for the terminal device, the PSCell change procedure is triggered.

In a specific implementation, if no SN (that is, no source SN) is configured for the terminal device, the MN triggers the PA procedure. Specifically, the MN may send an SN addition request to a candidate SN (namely, a first SN). The first SN allows access, reserves a radio resource for the terminal device, and sends an ACK message to the MN.

In another possible implementation, if an SN is configured for the terminal device, the MN or the SN may trigger the PC procedure. If the MN triggers the PSCell change procedure, the MN may send an SN addition request to a candidate SN (for example, a first SN in FIG. 4), and the candidate SN allows access and sends an ACK message to the MN. If the SN (not shown in FIG. 4) triggers the PSCell change procedure, the SN may send an SN change request to the MN. A candidate PSCell is indicated in the request. The MN sends, based on the request, an SN addition request to a candidate SN (for example, a first SN in FIG. 4) corresponding to the candidate PSCell. The candidate SN allows access, reserves a radio resource for the terminal device, and sends an ACK message to the MN.

S402: The MN sends an RRC reconfiguration message to the terminal device.

As described in S401, the MN sends the SN addition request to the candidate SN (for example, the first SN). After receiving the ACK message sent by the first SN, the MN may send the RRC reconfiguration message to the terminal device. The RRC reconfiguration message includes an SCG configuration of a target PSCell, and indicates the terminal device to add the target PSCell or change to the target PSCell, where the target PSCell is a cell prepared by the first SN for the terminal device.

S403: The terminal device records a time at which an RRC reconfiguration is received.

Specifically, because both the PA/PC and the CPAC occur, recording the time (a time 1 for short) at which the terminal device receives the RRC reconfiguration message in the PA/PC procedure may assist, when an SCG failure occurs, in analyzing a cause of the failure.

S404: The terminal device sends an RRC reconfiguration complete message to the MN, and the MN sends the RRC reconfiguration complete message to the first SN.

After receiving the RRC reconfiguration message, the terminal device may feed back the RRC reconfiguration complete message to the MN, to indicate that the configuration is successfully received. The MN may also feed back the RRC reconfiguration complete message to the first SN.

S405: The terminal device successfully performs PSCell addition or change.

In a specific implementation, after receiving the RRC reconfiguration message, the terminal device immediately performs random access to the target PSCell based on the SCG configuration of the target PSCell in the message. That the random access succeeds is that the PSCell addition or change succeeds.

S406: The MN or the SN triggers a CPAC procedure.

Specifically, the CPAC procedure is triggered after the PA/PC procedure is successfully executed. The CPAC procedure is a CPA procedure or a CPC procedure. The CPAC procedure triggered when no SN is configured for the terminal device is the CPA procedure, and the CPAC procedure triggered when an SN is configured for the terminal device is the CPC procedure.

Because the PA/PC procedure has been successfully executed, the SN configured for the terminal device is the first SN. Therefore, the CPAC procedure triggered in this case is the CPC procedure. In addition, the CPC procedure may be triggered by the MN or the first SN.

S407: The MN sends an SN addition request to one or more candidate SNs.

The one or more candidate SNs include a second SN in FIG. 4.

In an implementation, if the MN triggers the CPC procedure, the MN may send the SN addition request to the one or more candidate SNs respectively corresponding to one or more candidate PSCells. In another implementation, if the SN (the first SN in FIG. 4) of the terminal device triggers the CPC procedure, the SN may send an SN change request to the MN. One or more candidate PSCells and a trigger condition of the PSCell are indicated in the request. Optionally, the request may further indicate an SCG measurement configuration of a CPC. Further, the MN may send the SN addition request to the one or more candidate SNs respectively corresponding to the one or more candidate PSCells.

S408: The one or more candidate SNs send an ACK message to the MN.

After the one or more candidate SNs receive the SN addition request from the MN, it is assumed that the one or more candidate SNs allow access of the terminal device. In this case, the one or more candidate SNs reserve a radio resource for the terminal device and feed back the ACK message to the MN.

S409: The MN sends a CPAC configuration message to the terminal device.

After receiving the ACK message sent by the one or more candidate SNs, the MN sends the CPAC configuration message to the terminal device.

The CPAC configuration message is a CPA configuration message or a CPC configuration message. In the CPA procedure, a CPAC configuration is a CPA configuration. In the CPC procedure, a CPAC configuration is a CPC configuration. Because the CPC procedure is triggered, the CPC configuration message sent by the MN to the terminal device includes the CPC configuration. The CPC configuration includes an SCG configuration of the one or more candidate PSCells and the trigger condition of the PSCell. The CPC configuration may further include the SCG measurement configuration of the CPC.

S410: The terminal device records a time at which the CPAC configuration is received.

In this embodiment of this application, because both the PA/PC and the CPAC occur, recording the time (a time 2 for short) at which the terminal device receives the CPAC configuration message in the CPAC procedure may assist, when the SCG failure occurs, in analyzing the cause of the failure.

S411: The terminal device detects the SCG failure.

In a specific implementation, after receiving the CPAC configuration message, if it is detected that a candidate PSCell meets a corresponding trigger condition, the terminal device triggers execution of the CPAC. However, if the terminal device detects the SCG failure before the CPAC is triggered, the terminal device may record a time (a time 3 for short) at which the SCG failure is detected. The SCG failure may be an SCG RLF, or may be an SCG failure in any one of the foregoing SCG failure scenarios. This is not limited in embodiments of this application.

S412: The terminal device sends SCG failure information to the MN.

After detecting the SCG failure, the terminal device may send the SCG failure information to the MN.

In this embodiment of this application, the SCG failure information further includes first time information and/or second time information. The first time information indicates a time period (referred to as a first time period for short) from a time at which the terminal device receives a PA/PC command to the time at which the terminal device detects the SCG failure. The second time information indicates a time period (referred to as a second time period for short) from a time at which the terminal device receives a CPAC command to the time at which the terminal device detects the SCG failure. The time at which the terminal device receives the PA/PC command is the time (namely, the time 1) at which the terminal device receives the RRC reconfiguration message in S403. The RRC reconfiguration message is the PA/PC command. The time at which the terminal device receives the CPAC command is the time (namely, the time 2) at which the terminal device receives the CPAC configuration message in S409. The CPAC configuration message is the CPAC command. The two times have been recorded by the terminal device. The first time period and the second time period may be obtained through calculation based on the two times and the time (namely, the time 3) that is recorded in S410 and at which the SCG failure is detected.

For example, the first time information sent to the MN may include the time 1 and the time 3. After receiving the two times, the MN may calculate the first time period.

For example, the second time information sent to the MN may include the time 2 and the time 3. After receiving information about the two times, the MN may calculate the second time period.

For example, the first time information sent to the MN may include the first time period. In this implementation, the MN can obtain the first time period without further calculation after receiving the first time information.

For example, the second time information sent to the MN may include the second time period. In this implementation, the MN can obtain the second time period without further calculation after receiving the second time information.

In a possible implementation, the SCG failure information sent by the terminal device to the MN may further include the CPAC configuration sent by the MN to the terminal device.

In a possible implementation, after receiving the SCG failure information, the MN performs preliminary analysis. The MN determines, based on an SCG failure type and a trigger node (the MN and/or the SN that triggers the corresponding procedure in S401 and/or S406) in the SCG failure information, whether to forward the SCG failure information and a faulty SN to which the SCG failure information is forwarded. The faulty SN may be the source SN, or may be a target SN. The target SN may be an SN in which the SCG failure occurs, or may be a candidate SN. If it is determined to send the SCG failure information to the faulty SN, the MN may send a part or all of the SCG failure information to the faulty SN. In a possible implementation, the MN may send the first time information and/or the second time information to the faulty SN. In this way, the faulty SN can analyze a specific cause of the SCG failure based on the received time information. For example, it may be analyzed, based on the time information, whether the SCG failure is caused by an inappropriate time for triggering execution of the PA/PC or triggering execution of the CPAC by the terminal device in the two procedures in the scenario in which both the PA/PC and the CPAC occur, so that a mobility parameter can be appropriately adjusted. For example, a parameter such as a radio link monitoring (radio link monitoring, RLM) parameter, a beam failure detection (beam failure detection, BFD) parameter, a random access-related parameter (for example, a maximum transmission quantity of a random access message and a maximum quantity of consecutive LBT failures), or a maximum quantity or an interval time of RLC retransmissions of the MCG may be adjusted. In this way, a PA/PC configuration, a CPAC configuration, or the like on a network side can be optimized, to reduce a probability of the SCG failure, and improve quality of dual connectivity communication performed by the terminal device.

For example, FIG. 5 is a schematic flowchart of an information transmission method according to an embodiment of this application in the second case. In FIG. 5, the information transmission method provided in this embodiment of this application includes but is not limited to the following steps.

S501: The MN or the SN triggers a CPAC procedure.

Based on the foregoing descriptions, it can be learned that the CPAC procedure is a CPA procedure or a CPC procedure.

In a specific implementation, if no SN is configured for the terminal device, the MN triggers the CPA procedure.

In another possible implementation, if an SN is configured for the terminal device, the MN or the SN may trigger the CPC procedure.

The CPAC procedure in FIG. 5 may be the CPC procedure, or may be the CPA procedure. The figure does not clearly indicate that an SN (namely, a source SN) is configured for the terminal device.

S502: The MN sends an SN addition request to one or more candidate SNs.

The one or more candidate SNs include a second SN in FIG. 5.

If the CPAC procedure is the CPA procedure, the MN triggers the CPA procedure. The MN may send the SN addition request to the one or more candidate SNs corresponding to one or more candidate PSCells.

If the CPAC procedure is the CPC procedure, the MN or the SN triggers the CPC procedure. If the MN triggers the CPC procedure, the MN may send the SN addition request to the one or more candidate SNs corresponding to one or more candidate PSCells. If the SN (namely, a first SN in FIG. 5) of the terminal device triggers the CPC procedure, the SN may send an SN change request to the MN. The one or more candidate PSCells and a trigger condition of the PSCell are indicated in the request. Optionally, the request may further indicate an SCG measurement configuration of a CPC. Then, the MN sends the SN addition request to the one or more candidate SNs.

S503: The one or more candidate SNs send an ACK message to the MN.

After the one or more candidate SNs receive the SN addition request from the MN, it is assumed that the one or more candidate SNs allow access of the terminal device. In this case, the one or more candidate SNs reserve a radio resource for the terminal device and feed back the ACK message to the MN.

S504: The MN sends a CPAC configuration message to the terminal device.

In the CPA procedure, the MN sends a CPA configuration message to the terminal device, where the message includes a CPA configuration. The CPA configuration includes an SCG configuration of the one or more candidate PSCells and a trigger condition of the PSCell. The CPA configuration may further include an SCG measurement configuration of a CPA.

In the CPC procedure, the MN sends a CPC configuration message to the terminal device, where the message includes a CPC configuration. The CPC configuration includes an SCG configuration of the one or more candidate PSCells and the trigger condition of the PSCell. The CPC configuration may further include the SCG measurement configuration of the CPC.

S505: The terminal device records a time at which a CPAC configuration is received.

In this embodiment of this application, because both the PA/PC and the CPAC occur, recording the time (a time 4 for short) at which the terminal device receives the CPAC configuration message in the CPAC procedure may assist, when an SCG failure occurs, in analyzing a cause of the failure.

S506: The MN or the SN triggers a PA/PC procedure.

In a specific implementation, similar to that for the CPAC, if no SN is configured for the terminal device, the MN triggers the PA procedure.

In another possible implementation, if an SN is configured for the terminal device, the MN or the SN may trigger the PC procedure.

S507: The MN sends an RRC reconfiguration message to the terminal device, to indicate the terminal device to perform a PA/PC on a target PSCell.

For specific descriptions of S505 and S506, refer to corresponding descriptions of S401 and S402. Details are not described herein again.

S508: The terminal device records a time at which the RRC reconfiguration message is received.

In this embodiment of this application, because both the PA/PC and the CPAC occur, recording the time (a time 5 for short) at which the terminal device receives the RRC reconfiguration message in the PA/PC procedure may assist, when the SCG failure occurs, in analyzing the cause of the failure.

S509: The terminal device detects the SCG failure.

In a specific implementation, after receiving the RRC reconfiguration message sent by the MN, the terminal device detects that the SCG failure occurs.

In a possible implementation, the SCG failure may be a failure in executing the PA/PC procedure. For example, the SCG failure may be a PSCell addition or change failure in the PA/PC procedure. In another possible implementation, the SCG failure may be an SCG RLF that occurs within preset duration after the PA/PC procedure is successfully executed. For example, after the terminal device accesses the target PSCell, a timer may be started. Timing duration of the timer is the preset duration, and an RLF occurs before the timer expires. It may be understood that the preset duration may be set based on an actual situation. This is not limited in embodiments of this application. For example, the RLF may be an RLF between the terminal device and the first SN. Alternatively, the SCG failure may be, for example, an SCG failure in any one of the foregoing SCG failure scenarios. This is not limited in embodiments of this application.

After detecting the SCG failure, the terminal device may record a time (a time 6 for short) at which the SCG failure is detected.

S510: The terminal device sends SCG failure information to the MN.

After detecting the SCG failure, the terminal device may send the SCG failure information to the MN.

In this embodiment of this application, the SCG failure information includes first time information and/or second time information. For definitions of the first time information and the second time information, refer to corresponding descriptions in S412. In this embodiment, a time at which the terminal device receives a PA/PC command is the time (namely, the time 5) at which the terminal device receives the RRC reconfiguration message in S507. A time at which the terminal device receives a CPAC command is the time (namely, the time 4) at which the terminal device receives the CPAC configuration message in S504. The two times have been recorded by the terminal device. A first time period and a second time period may be obtained through calculation based on the two times and the time (namely, the time 6) that is recorded in S508 and at which the SCG failure is detected.

In a possible implementation, the first time information sent to the MN may include the time 5 and the time 6. After receiving the two times, the MN may calculate the first time period.

In a possible implementation, the second time information sent to the MN may include the time 4 and the time 6. After receiving information about the two times, the MN may calculate the second time period.

In a possible implementation, the first time information sent to the MN may include the first time period. In this implementation, the MN can obtain the first time period without further calculation after receiving the first time information.

In a possible implementation, the second time information sent to the MN may include the second time period. In this implementation, the MN can obtain the second time period without further calculation after receiving the second time information.

In a possible implementation, the SCG failure information sent by the terminal device to the MN may further include the CPAC configuration sent by the MN to the terminal device.

For beneficial effects of this embodiment of this application, refer to corresponding descriptions of beneficial effects in FIG. 4. Details are not described herein again.

In a possible implementation, in the information transmission method shown in FIG. 4 or FIG. 5, the SCG failure information sent by the MN to the faulty SN may further include the CPAC configuration in the CPAC procedure. For example, in an implementation, the CPAC configuration may be a CPAC configuration that is received from the MN and that is locally obtained by the terminal device after the SCG failure is detected. In this implementation, because the CPAC procedure has not been successfully executed when the SCG failure occurs, the terminal device does not delete the CPAC configuration received from the MN, so that the CPAC configuration can be sent to the MN as a part of the SCG failure information. Therefore, after receiving the SCG failure information, when sending the SCG failure information to the faulty SN, the MN may also send the CPAC configuration to the faulty SN. In this way, the faulty SN can more effectively analyze the cause of the SCG failure based on the CPAC configuration.

Alternatively, for example, in another implementation, after successfully executing the CPAC procedure, the terminal device detects the SCG failure, and the terminal device deletes the CPAC configuration received from the MN. Therefore, the CPAC configuration cannot be reported to the MN. In this case, the MN retrieves the locally stored CPAC configuration. The CPAC configuration in the MN may be associated with an identifier of the terminal device and stored in a context of the terminal device. After receiving the SCG failure information from the terminal device, the MN may find the CPAC configuration based on the identifier of the terminal device. Then, when the SCG failure information is sent to the faulty SN, the CPAC configuration may also be sent to the faulty SN. For example, for related descriptions of locally storing and searching for the CPAC configuration by the MN, refer to the following corresponding descriptions of S610 in FIG. 6. Details are not described herein.

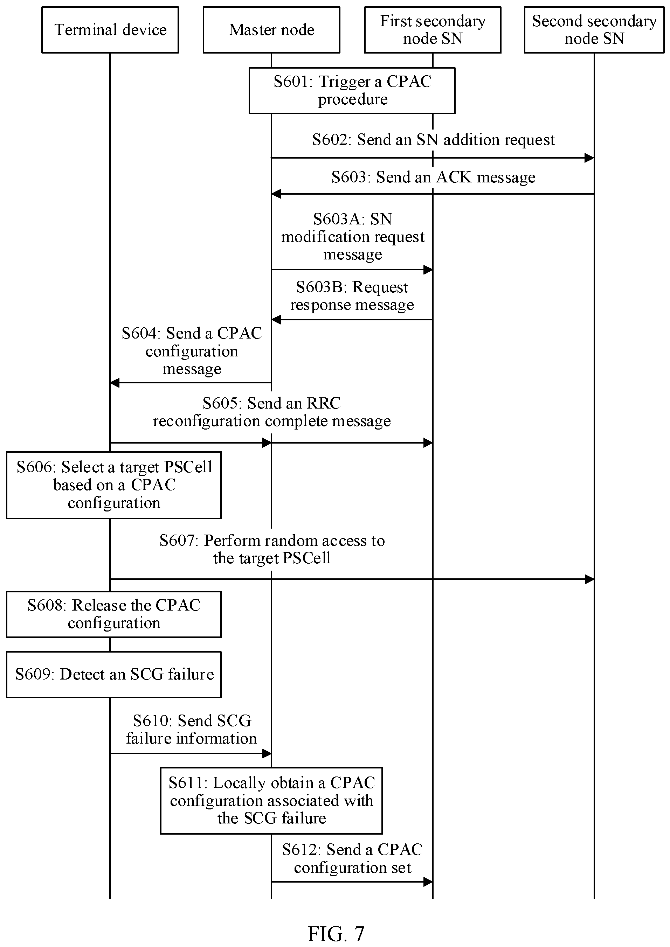

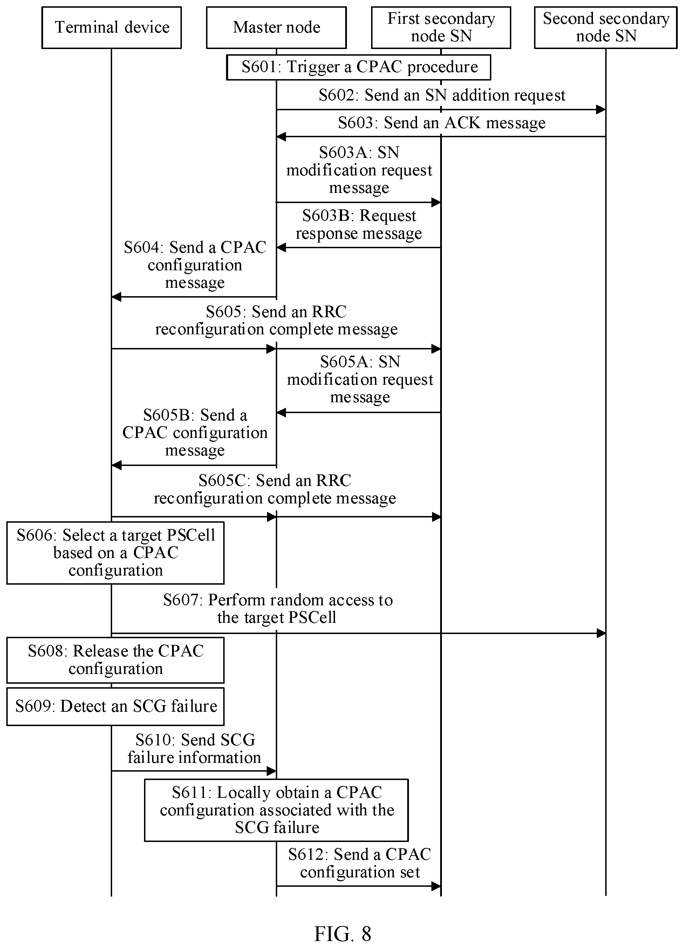

In a possible implementation, in the CPAC procedure shown in FIG. 4 or FIG. 5, the MN may send the CPAC configuration to the terminal device a plurality of times. In this case, the CPAC configuration included in the SCG failure information sent by the terminal device to the MN may include a plurality of CPAC configurations received from the MN. Alternatively, the CPAC configuration that is locally stored in the MN and that is associated with the identifier of the terminal device may include a plurality of CPAC configurations delivered to the terminal device. In this case, after the SCG failure occurs, the CPAC configuration sent by the MN to the faulty SN may alternatively be the plurality of CPAC configurations delivered to the terminal device. For a specific update procedure, refer to the following corresponding example descriptions in FIG. 7 or FIG. 8. Details are not described herein. In addition, in this case, the recorded time at which the CPAC configuration is received in FIG. 4 or FIG. 5 may be a time at which the terminal device receives the CPAC configuration for the last time in the CPAC procedure, or may be a time at which the terminal device receives the CPAC configuration for the first time.

With reference to FIG. 4 and FIG. 5, the foregoing describes examples of the information transmission method provided in embodiments of this application in the scenario in which both the PA/PC and the CPAC occur. The following describes another information transmission method. The information transmission method may be combined with the foregoing embodiments shown in FIG. 4 and FIG. 5, or may be separately performed. In addition, content described in the embodiments shown in FIG. 4 and FIG. 5 is not described again.

Generally, in the CPAC procedure, after successfully executing the CPAC procedure, the terminal device releases the CPAC configuration received from the MN. In other words, the terminal device locally deletes the CPAC configuration after successfully executing the CPAC procedure. In this case, if the SCG failure occurs, because the terminal device has released the CPAC configuration, the SCG failure information sent by the terminal device to the MN cannot include the CPAC configuration. Consequently, the network side cannot accurately analyze the cause of the SCG failure. Therefore, an embodiment of this application provides a corresponding information transmission method for resolving the problem. For example, refer to FIG. 6 to FIG. 8. The information transmission method provided in this embodiment of this application includes but is not limited to the following steps.

S601: An MN or an SN triggers a CPAC procedure.

S602: The MN sends an SN addition request to one or more candidate SNs.

S603: The one or more candidate SNs send an ACK message to the MN.

S604: The MN sends a CPAC configuration message to a terminal device.

For descriptions of S601 to S604, refer to the descriptions of S501 to S504. Details are not described herein again.

S605: The terminal device sends an RRC reconfiguration complete message.

After receiving a CPAC configuration, the terminal device may feed back the RRC reconfiguration complete message to the MN, to indicate that the CPAC configuration is successfully received. If the CPAC procedure is a CPC procedure, and the CPC procedure is triggered by an SN (for example, a first SN in FIG. 6), after receiving the RRC reconfiguration complete message of the terminal device, the MN may further send the message to the SN.

S606: The terminal device selects a target PSCell based on the CPAC configuration.

The CPAC configuration includes an SCG configuration of one or more candidate PSCells and a trigger condition of the PSCell. After receiving the CPAC configuration message, the terminal device does not immediately add any candidate PSCell. Instead, first, it is continuously determined whether there is the target PSCell that meets a trigger condition. When detecting that a candidate PSCell meets a corresponding trigger condition, the terminal device selects the PSCell that meets the corresponding trigger condition as the target PSCell.

S607: The terminal device performs random access to the target PSCell.

After determining the selected target PSCell, the terminal device feeds back the RRC reconfiguration complete message to the MN, to indicate the selected target PSCell to the MN. The MN feeds back the RRC reconfiguration complete message to an SN corresponding to the selected target PSCell. Then, the terminal device may perform random access to the selected target PSCell (for example, a second SN in FIG. 6).

S608: The terminal device releases the CPAC configuration.

After successfully executing the CPAC procedure, the terminal device releases the corresponding CPAC configuration.

S609: The terminal device detects an SCG failure.

After releasing the CPAC configuration, the terminal device detects that the SCG failure occurs. The SCG failure may be, for example, an SCG failure in any one of the foregoing SCG failure scenarios. This is not limited in embodiments of this application.

S610: The terminal device sends SCG failure information to the MN.

After detecting the SCG failure, the terminal device may send the SCG failure information to the MN.

S611: The MN locally obtains a CPAC configuration associated with the SCG failure.

In a specific implementation, if the CPAC procedure is triggered by the MN, the CPAC configuration sent to the terminal device is generated by the MN. The MN may locally store the CPAC configuration.

Specifically, if the CPAC procedure is the CPC procedure, and the CPC procedure is triggered by a source SN (for example, the first SN), the source SN sends an SN change request to the MN. The change request includes a CPC configuration, for example, includes an SCG configuration of one or more candidate PSCells and a trigger condition of the PSCell. Optionally, information such as an SCG measurement configuration of a CPC is further included. Therefore, after receiving the change request, the MN may obtain the CPC configuration in the request and store the CPC configuration in a local memory. For example, the CPC configuration may be stored in a context of the terminal device stored in the MN. In the MN, an identifier of the terminal device and the context of the terminal device are in one-to-one correspondence. Therefore, the context of the terminal device may be found by using the identifier of the terminal device. Alternatively, the CPC configuration may be stored in any storage space of the MN, and the CPC configuration is stored in association with the identifier of the corresponding terminal device. In this way, the CPC configuration can be found by using the identifier of the terminal device. For example, the identifier of the terminal device may be a cell radio network temporary identifier (cell radio network temporary identifier, C-RNTI) of the terminal device. Alternatively, the identifier of the terminal device may be other information, for example, a MAC address or an IP address of the terminal device, that can uniquely identify the terminal device. This is not limited in embodiments of this application.

In a possible implementation, the SN change request sent by the source SN to the MN includes an SN mobility information information element, and the CPC configuration may be included in the information element. In other words, the CPC configuration is indicated by SN mobility information.

S612: The MN sends the CPAC configuration set to a faulty SN.

In an implementation, the MN may analyze an SCG failure type and a trigger node (the MN or the SN that triggers the CPAC procedure in S601) in the SCG failure information, to determine whether to forward the SCG failure information and the faulty SN to which the SCG failure information is forwarded. The faulty SN may be the source SN, or may be a target SN. The target SN may be an SN in which the SCG failure occurs, or may be a candidate SN. If it is determined to send the SCG failure information to the faulty SN, the MN may send a part or all of the SCG failure information to the faulty SN. In a possible implementation, the MN may also send the locally obtained CPAC configuration to the faulty SN. In this way, the faulty SN can analyze a specific cause of the SCG failure based on the received CPAC configuration. For example, it may be analyzed, based on the CPAC configuration, whether the SCG failure is caused by an inappropriate trigger condition, to appropriately adjust a mobility parameter. For example, a parameter such as a T316 timeout threshold of the MN for the terminal device, a radio link monitoring parameter, a beam failure detection parameter, a random access-related parameter (for example, a maximum transmission quantity of a random access message and a maximum quantity of consecutive LBT failures), or a maximum quantity or an interval time of RLC retransmissions of the MCG may be adjusted. In this way, a CPAC configuration or the like on a network side can be optimized, to reduce a probability of the SCG failure, and improve quality of dual connectivity communication performed by the terminal device.

In a possible implementation, for example, refer to FIG. 7. In comparison with FIG. 6, steps S603A and S603B are added in FIG. 7. Specifically, for S601 and S602 in FIG. 7, refer to the descriptions of S601 and S602 in FIG. 6. A CPAC procedure in S601 is a CPC procedure, and the CPC procedure is triggered by a source SN (the first SN in FIG. 6). The source SN may send an SN change request to an MN. A CPAC configuration (referred to as a CPAC configuration before update, namely, an initial CPAC configuration) is indicated in the request. The CPAC configuration before update includes an SCG configuration of one or more candidate PSCells and a trigger condition of the PSCell. Optionally, an SCG measurement configuration of a CPC is further included. A difference lies in that, in FIG. 7, after the MN sends an SN addition request to one or more candidate SNs respectively corresponding to the one or more candidate PSCells, not all the candidate SNs that receive the request are allowed to be added. In this case, the MN receives ACK messages of some candidate SNs that are allowed to be added. In other words, in S603 in FIG. 7, only some candidate SNs that are allowed to be added send the ACK messages to the MN. The MN may determine, from these received ACK messages, a candidate PSCell that is allowed to be added. Then, the MN may send an SN modification request to the source SN, and indicate, in the request, the candidate PSCell that is allowed to be added. For example, refer to S603A in FIG. 7. After receiving the request, the source SN updates the CPAC configuration based on the request. An updated CPAC configuration (referred to as a first updated CPAC configuration) includes an SCG configuration of the candidate PSCell that is allowed to be added and a trigger condition of the PSCell. Optionally, the corresponding SCG measurement configuration is further included. Then, the source SN sends the first updated CPAC configuration to the MN by using a response message (for example, an ACK message). Refer to S603B in FIG. 7.

In a possible implementation, the response message sent by the source SN to the MN includes an SN mobility information information element, and the first updated CPAC configuration may be included in the information element. In other words, the first updated CPAC configuration is indicated by SN mobility information.

After receiving the first updated CPAC configuration, the MN may locally store the first updated CPAC configuration in association with an identifier of a terminal device. For example, the first updated CPAC configuration may be stored in a context of the terminal device. Optionally, because the MN has obtained and stored the CPAC configuration before update from the SN change request sent by the source SN, after obtaining the first updated CPAC configuration, the MN may replace the CPAC configuration before update with the first updated CPAC configuration and locally store the first updated CPAC configuration.

In addition, after receiving the first updated CPAC configuration, the MN sends the first updated CPAC configuration to the terminal device. In other words, in S604 in FIG. 7, a CPAC configuration included in a CPAC configuration message sent by the MN to the terminal device is the first updated CPAC configuration. In this case, in S611 in FIG. 7, a CPAC configuration that is locally obtained by the MN and associated with an SCG failure may be the first updated CPAC configuration. Alternatively, a CPAC configuration obtained by the MN may include the CPAC configuration before update and the first updated CPAC configuration, that is, a CPAC configuration set is obtained. Then, in S612 in FIG. 7, a CPAC configuration sent to a faulty SN may be the first updated CPAC configuration or may be the CPAC configuration set. In addition to the further descriptions herein, for specific procedures and implementations of other steps in FIG. 7, refer to related descriptions of corresponding steps in FIG. 6. Details are not described herein again.

In another possible implementation, for example, refer to FIG. 8. In comparison with FIG. 7, steps S605A, S605B, and S605C are added in FIG. 8. Specifically, for S601 to S605 in FIG. 8, refer to the descriptions of S601 to S605 in FIG. 7. Similarly, a CPAC procedure in S601 is a CPC procedure, and the CPC procedure is triggered by a source SN (the first SN). The source SN may send an SN change request to an MN. A CPAC configuration (referred to as a CPAC configuration before update, namely, an initial CPAC configuration) is indicated in the request. A difference lies in that, in FIG. 8, after a terminal device sends an RRC reconfiguration complete message in S605, the source SN may send an SN modification request message to the MN, to actively request to update (modify) the CPAC configuration sent to the terminal device. For example, refer to S605A in FIG. 8. The request message includes a CPAC configuration (referred to as a second updated CPAC configuration) obtained through the active update by the source SN. Similarly, the second updated CPAC configuration includes an updated SCG configuration of a candidate PSCell and a trigger condition of the PSCell. Optionally, a corresponding SCG measurement configuration may be further included.

In a possible implementation, the SN modification request message sent by the source SN to the MN includes an SN mobility information information element, and the second updated CPAC configuration may be included in the information element. In other words, the second updated CPAC configuration is indicated by SN mobility information.

After receiving the second updated CPAC configuration, the MN may locally store the second updated CPAC configuration in association with an identifier of the terminal device. For example, the second updated CPAC configuration may be stored in context information of the terminal device.

In a possible implementation, if steps S603A and S603B do not exist in FIG. 8, the MN has obtained and stored the CPAC configuration before update (the initial CPAC configuration) from the SN change request sent by the source SN in S601. Together with the second updated CPAC configuration stored this time, the MN stores two CPAC configurations, namely, a CPAC configuration set, corresponding to the terminal device.

In a possible implementation, if steps S603A and S603B exist in FIG. 8, the MN has obtained and stored a first updated CPAC configuration from a request response message in S603B. Together with the second updated CPAC configuration stored this time, the MN stores two updated CPAC configurations corresponding to the terminal device.

In addition, after receiving the second updated CPAC configuration, the MN sends the second updated CPAC configuration to the terminal device (refer to S605B in FIG. 8). In addition, refer to S605C in FIG. 8. After receiving the second updated CPAC configuration, the terminal device may feed back an RRC reconfiguration complete message to the MN, to indicate that the second CPAC configuration is successfully received. After receiving the RRC reconfiguration complete message of the terminal device, the MN may further send the message to the source SN. In this case, in S611 in FIG. 8, a CPAC configuration that is locally obtained by the MN and associated with an SCG failure may be a CPAC configuration set. If steps S603A and S603B do not exist, the CPAC configuration set includes the CPAC configuration before update and the second updated CPAC configuration. If steps S603A and S603B exist, the CPAC configuration set includes the first updated CPAC configuration and the second updated CPAC configuration. Then, in S612 in FIG. 8, a CPAC configuration sent to a faulty SN may be the CPAC configuration set. In addition to the further descriptions herein, for specific procedures and implementations of other steps in FIG. 8, refer to related descriptions of corresponding steps in FIG. 6 and FIG. 7. Details are not described herein again.

In a possible implementation, if the CPAC configuration sent by the source SN to the MN is indicated by an SN mobility information information element, for example, the SN mobility information information element includes the CPAC configuration, the CPAC configuration locally stored in the MN may be SN mobility information that indicates the CPAC configuration. In addition, the CPAC configuration sent by the MN to the faulty SN and used to analyze a cause of the SCG failure may also be the SN mobility information information element that indicates the CPAC configuration.

In a possible implementation, a serial number status transfer message or an SN release acknowledge message sent by the source SN to the MN includes an SN mobility information information element set, and the SN mobility information information element set indicates a plurality of CPAC configurations delivered by the MN to UE. For example, in FIG. 6 to FIG. 8, after the terminal device successfully performs random access to the target PSCell (refer to S607), the source SN sends the serial number status transfer message to the MN. For example, in FIG. 6 to FIG. 8, after the terminal device feeds back, to the MN, the RRC reconfiguration complete message that indicates the selected target PSCell, and before the terminal device performs random access to the target PSCell (refer to S607), the MN sends an SN release request to the source SN, and the source SN feeds back the SN release request acknowledge message to the MN.

If steps S603A, S603B, S605A, and S605B exist, the SN mobility information information element set includes the first updated CPAC configuration and the second updated CPAC configuration. If only steps S603A and S603B exist, the SN mobility information information element set includes the first updated CPAC configuration. If only steps S604A and S604B exist, the SN mobility information information element set includes the initial CPAC configuration and the second updated CPAC configuration. If steps S603A, S603B, S605A, and S605B do not exist, the SN mobility information information element set includes the initial CPAC configuration.

In a possible implementation, in the implementations in FIG. 4 to FIG. 8, if the MN identifies, based on the SCG failure information received from the terminal device, that the SCG failure type is "too early handover" or "handover to a wrong cell", a message that is sent by the MN to the faulty SN and that includes the SCG failure information includes a C-RNTI used in a source PSCell in which the terminal device is located before the SCG failure. The "too early handover" may also be referred to as "too early PSCell change (too early PSCell change)". The "handover to a wrong cell" may also be referred to as "triggering PSCell change to wrong PSCell (triggering PSCell change to wrong PSCell)".

It may be understood that the SCG failure information and the CPAC configuration that are sent by the MN to the faulty SN may be sent in a same message, or may be sent in different messages. This is not limited in embodiments of this application.

In conclusion, in a CPAC application scenario, the master node may store, in the context corresponding to the terminal device, the CPAC configuration set configured for the terminal device. In this way, after the terminal device detects that the SCG failure occurs and sends the SCG failure information to the master node to notify the master node that the SCG failure occurs, the master node can obtain the corresponding CPAC configuration set from the locally stored context of the terminal device. In addition, the CPAC configuration set is sent to the faulty SN, so that the faulty SN can more accurately analyze the cause of the SCG failure based on the CPAC configuration set. For example, it may be analyzed, based on the CPAC configuration, whether the SCG failure is caused by the inappropriate trigger condition. In addition, in embodiments of this application, in the scenario in which the PA/PC and the CPAC occur, the terminal device may obtain first time information and/or second time information. After detecting that the SCG failure occurs, the terminal device may send the first time information and/or the second time information to the master node as a part of the SCG failure information. Optionally, the master node may further send the first time information and/or the second time information to the faulty SN. In this way, the master node or the faulty SN can more accurately analyze the cause of the SCG failure based on the first time information and/or the second time information. The cause of the SCG failure is accurately analyzed, to optimize the mobility parameter related to the SCG failure, reduce the probability of the SCG failure, and improve the quality of the dual connectivity communication performed by the terminal device.

It should be understood that functions performed by the master node in the foregoing information transmission method may alternatively be performed by a module (for example, a chip) in the master node, or may be performed by a logical module or software that can implement all or some of the functions of the master node. Functions performed by the secondary node may alternatively be performed by a module (for example, a chip) in the secondary node, or may be performed by a logical module or software that can implement all or some of the functions of the secondary node. Functions performed by the terminal device may alternatively be performed by a module (for example, a chip) in the terminal device, or may be performed by a logical module or software that can implement all or some of the functions of the terminal device.

The foregoing mainly describes the information transmission method provided in embodiments of this application. It may be understood that, to implement the corresponding functions, the control units or devices include corresponding hardware structures and/or software modules for executing the functions. In combination with example units and steps described in embodiments disclosed in this specification, this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, the device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that the division of the modules in embodiments of this application is an example, and is merely logical functional division, and other division may be used in an actual implementation.

When each functional module is obtained through division based on each corresponding function, an embodiment of this application further provides an apparatus configured to implement any one of the foregoing methods. For example, an apparatus is provided, including a unit (or means) configured to implement the steps in any one of the foregoing methods.

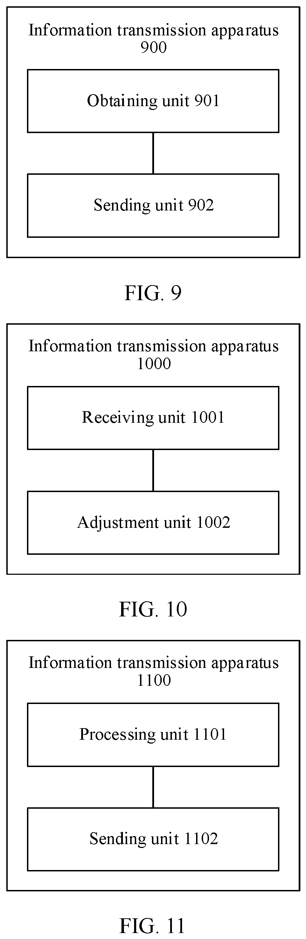

For example, FIG. 9 is a diagram of a structure of an information transmission apparatus 900 according to an embodiment of this application. The information transmission apparatus 900 shown in FIG. 9 may be the master node in any embodiment of the foregoing information transmission method, or may be a module (for example, a chip) in the master node, or may be a logical module or software that can implement all or some functions of the master node. The information transmission apparatus 900 is configured to implement an operation implemented by the master node in any embodiment of the foregoing information transmission method. The information transmission apparatus 900 may include an obtaining unit 901 and a sending unit 902.

The obtaining unit 901 is configured to obtain a conditional primary secondary cell addition/change CPAC configuration set from a stored context of a terminal device, where the CPAC configuration set includes one or more CPAC configurations associated with a secondary cell group SCG failure.

The sending unit 902 is configured to send the CPAC configuration set to a secondary node.

In a possible implementation, the SCG failure is an SCG failure that occurs after the terminal device successfully executes a CPAC procedure and releases a CPAC configuration.

In a possible implementation, the information transmission apparatus 900 further includes a receiving unit, configured to receive SCG failure information from the terminal device, where the SCG failure information indicates the SCG failure.

The obtaining unit 901 is specifically configured to: determine, by the information transmission apparatus 900, the CPAC configuration set in a local storage of the context of the terminal device based on an identifier of the terminal device.

In a possible implementation, the CPAC configuration set includes a first CPAC configuration, the first CPAC configuration is obtained by the information transmission apparatus 900 from a first message from a source secondary node, and the first message is a secondary node change request message sent by the source secondary node.

In a possible implementation, the CPAC configuration set includes a second CPAC configuration, the second CPAC configuration is obtained by the information transmission apparatus 900 from a second message from the source secondary node, the second message is a response message sent by the source secondary node based on a secondary node modification request of the information transmission apparatus 900 before the information transmission apparatus 900 sends an RRC configuration to the terminal device, and the RRC configuration indicates the CPAC configuration of the terminal device.

In a possible implementation, the CPAC configuration set includes a third CPAC configuration, the third CPAC configuration is obtained by the information transmission apparatus 900 from a third message from the source secondary node, the third message is a CPAC configuration change request message initiated by the source secondary node after the information transmission apparatus 900 sends the RRC configuration to the terminal device, and the RRC configuration indicates the CPAC configuration of the terminal device.

In a possible implementation, the SCG failure information includes first time information and/or second time information. The first time information indicates a time period from a time at which the terminal device receives a primary secondary cell addition/change PA/ PC command to a time at which the terminal device detects the SCG failure, and the second time information indicates a time period from a time at which the terminal device receives a conditional primary secondary cell addition/change CPAC command to the time at which the terminal device detects the SCG failure.

In a possible implementation, the sending unit 902 is further configured to send the first time information and/or the second time information to the secondary node.

For specific operations and beneficial effects of the units in the information transmission apparatus 900 shown in FIG. 9, refer to the corresponding descriptions in FIG. 3A to FIG. 8 and the possible implementations thereof. Details are not described herein again.

For example, FIG. 10 is a diagram of a structure of an information transmission apparatus 1000 according to an embodiment of this application. The information transmission apparatus 1000 shown in FIG. 10 may be the secondary node in any embodiment of the foregoing information transmission method, or may be a module (for example, a chip) in the secondary node, or may be a logical module or software that can implement all or some functions of the secondary node. The information transmission apparatus 1000 is configured to implement an operation implemented by the secondary node in any embodiment of the foregoing information transmission method. The information transmission apparatus 1000 may include a receiving unit 1001 and an adjustment unit 1002.

The receiving unit 1001 is configured to receive a conditional primary secondary cell addition/change CPAC configuration set from a master node, where the CPAC configuration set includes one or more CPAC configurations associated with a secondary cell group SCG failure.

The adjustment unit 1002 is configured to adjust a mobility parameter based on the CPAC configuration set.

In a possible implementation, the SCG failure is an SCG failure that occurs after a terminal device successfully executes a CPAC procedure and releases a CPAC configuration.

In a possible implementation, the receiving unit 1001 is further configured to receive first time information and/or second time information from the master node, where the first time information indicates a time period from a time at which the terminal device receives a primary secondary cell addition/change PAC command to a time at which the terminal device detects the SCG failure, and the second time information indicates a time period from a time at which the terminal device receives a conditional primary secondary cell addition/change CPAC command to the time at which the terminal device detects the SCG failure.

The adjustment unit 1002 is specifically configured to adjust the mobility parameter based on the CPAC configuration set and the first time information and/or the second time information.

For specific operations and beneficial effects of the units in the information transmission apparatus 1000 shown in FIG. 10, refer to the corresponding descriptions in FIG. 3A to FIG. 8 and the possible implementations thereof. Details are not described herein again.

For example, FIG. 11 is a diagram of a structure of an information transmission apparatus 1100 according to an embodiment of this application. The information transmission apparatus 1100 shown in FIG. 11 may be the terminal device in any embodiment of the foregoing information transmission method, or may be a module (for example, a chip) in the terminal device, or may be a logical module or software that can implement all or some functions of the terminal device. The information transmission apparatus 1100 is configured to implement an operation implemented by the terminal device in any embodiment of the foregoing information transmission method. The information transmission apparatus 1100 may include a processing unit 1101 and a sending unit 1102.

The processing unit 1101 is configured to determine that a secondary cell group SCG failure occurs.

The sending unit 1102 is configured to send SCG failure information to a master node, where the SCG failure information includes first time information and/or second time information, the first time information indicates a time period from a time at which the UE receives a primary secondary cell addition/change PA/PC command to a time at which the UE detects the SCG failure, the second time information indicates a time period from a time at which the information transmission apparatus receives a conditional primary secondary cell addition/change CPAC command to the time at which the information transmission apparatus detects the SCG failure, and the SCG failure information is used to adjust a mobility parameter.

In a possible implementation, the SCG failure is an SCG failure that occurs before a CPAC is configured and execution of the CPAC is triggered after the UE successfully executes a PA/PC procedure; or the SCG failure is an SCG failure that occurs after execution of a PA/PC procedure is configured and the execution of the PA/PC fails or succeeds before a CPAC is configured and execution of the CPAC is triggered.

In a possible implementation, the SCG failure information further includes a conditional primary secondary cell addition/change CPAC configuration set, and the CPAC configuration set includes one or more CPAC configurations associated with the SCG failure.

For specific operations and beneficial effects of the units in the information transmission apparatus 1100 shown in FIG. 11, refer to the corresponding descriptions in FIG. 3A to FIG. 8 and the possible implementations thereof. Details are not described herein again.

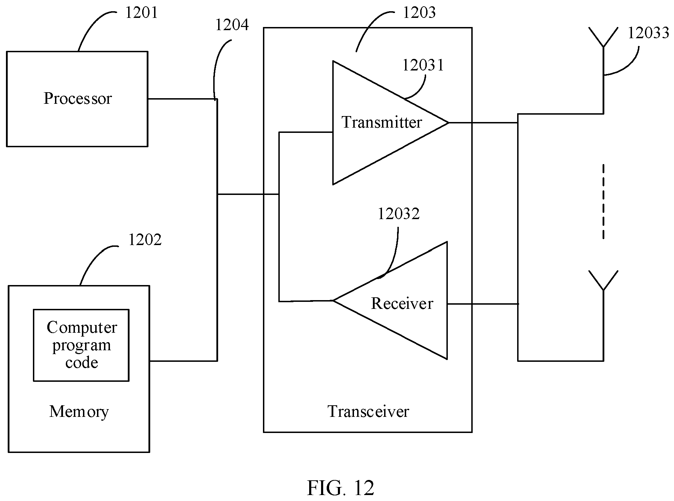

An embodiment of this application further provides an example diagram of a structure of another information transmission apparatus. Refer to FIG. 12. As shown in FIG. 12, an information transmission apparatus 1200 may include a processor 1201, a memory 1202, a transceiver 1203, and a bus 1204. The memory 1202 may exist independently, and may be connected to the processor 1201 through the bus 1204. The memory 1202 may be alternatively integrated with the processor 1201. The bus 1204 is configured to implement a connection between these components. In a case, as shown in FIG. 12, the transceiver 1203 may include a transmitter 12031, a receiver 12032, and an antenna 12033. In another case, the transceiver 1203 may include a transmitter (namely, an output interface) and a receiver (namely, an input interface). The transmitter may include a transmitter machine and an antenna, and the receiver may include a receiver machine and an antenna.

When computer program instructions stored in the memory 1202 are executed by the processor 1201, the operations performed by the master node in the foregoing embodiments may be implemented. The transceiver 1203 is configured to cooperate with the processor 1201 to implement receiving and sending operations of the master node in the foregoing embodiments. Alternatively, when computer program instructions stored in the memory 1202 are executed by the processor 1201, the operations performed by the secondary node in the foregoing embodiments may be implemented. The transceiver 1203 is configured to cooperate with the processor 1201 to implement receiving and sending operations of the secondary node in the foregoing embodiments. Alternatively, when computer program instructions stored in the memory 1202 are executed by the processor 1201, the operations performed by the terminal device in the foregoing embodiments may be implemented. The transceiver 1203 is configured to cooperate with the processor 1201 to implement receiving and sending operations of the terminal device in the foregoing embodiments.

For specific operations and beneficial effects implemented by the units in the information transmission apparatus 1200, refer to the corresponding descriptions in FIG. 3A to FIG. 8 and the possible implementations thereof. Details are not described herein again.

An embodiment of this application further provides a chip. The chip includes a processor and a memory. The memory is configured to store a computer program or computer instructions. The processor is configured to execute the computer program or the computer instructions stored in the memory, so that the chip performs the operations performed by the master node in FIG. 3A to FIG. 8 and the possible implementations thereof; or the chip performs the operations performed by the secondary node in FIG. 3A to FIG. 8 and the possible implementations thereof; or the chip performs the operations performed by the terminal device in FIG. 3A to FIG. 8 and the possible implementations thereof.

An embodiment of this application further provides a computer-readable storage medium. The computer-readable storage medium stores a computer program or computer instructions, and the computer program or the computer instructions are executed by a processor to implement the methods implemented by the master node in FIG. 3A to FIG. 8 and the possible implementations thereof; or the computer program or the computer instructions are executed by a processor to implement the methods implemented by the secondary node in FIG. 3A to FIG. 8 and the possible implementations thereof; or the computer program or the computer instructions are executed by a processor to implement the methods implemented by the terminal device in FIG. 3A to FIG. 8 and the possible implementations thereof.

An embodiment of this application further provides a computer program product. When the computer program product is read and executed by a computer, the methods implemented by the master node in FIG. 3A to FIG. 8 and the possible implementations thereof are performed; or the methods implemented by the secondary node in FIG. 3A to FIG. 8 and the possible implementations thereof are performed; or the methods implemented by the terminal device in FIG. 3A to FIG. 8 and the possible implementations thereof are performed.

An embodiment of this application further provides a communication system. The communication system includes a master node and a secondary node. The master node may be the master node in FIG. 3A to FIG. 8 and the possible implementations thereof. The secondary node may be the secondary node in FIG. 3A to FIG. 8 and the possible implementations thereof.

In a possible implementation, the communication system further includes a terminal device. The terminal device may be the terminal device in FIG. 3A to FIG. 8 and the possible implementations thereof.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the terms such as "first" and "second" are used in the following descriptions to describe various elements, these elements should not be limited by the terms. These terms are merely used to distinguish one element from another element.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that "one embodiment", "an embodiment", and "a possible implementation" mentioned in the entire specification mean that a specific feature, structure, or characteristic related to the embodiment or an implementation is included in at least one embodiment of this application. Therefore, "in one embodiment" or "in an embodiment" or "a possible implementation" appearing in the entire specification may not necessarily refer to a same embodiment. In addition, these particular features, structures, or characteristics may be combined in one or more embodiments by using any appropriate manner.

Mutual reference may be made to content in embodiments of this application. Unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. An information transmission method, wherein the method comprises:
obtaining, by a master node, a conditional primary secondary cell addition/change CPAC configuration set from a stored context of a terminal device, wherein the CPAC configuration set comprises one or more CPAC configurations associated with a secondary cell group SCG failure; and
sending, by the master node, the CPAC configuration set to a secondary node.

2. The method according to claim 1, wherein the method further comprises:
receiving, by the master node, SCG failure information from the terminal device, wherein the SCG failure information indicates the SCG failure; and
the obtaining, by a master node, a conditional primary secondary cell addition/change CPAC configuration set comprises:
determining, by the master node, the CPAC configuration set in the context of the terminal device based on an identifier of the terminal device.

3. The method according to claim 1 or 2, wherein the CPAC configuration set comprises a first CPAC configuration, the first CPAC configuration is obtained by the master node from a first message from a source secondary node, and the first message is a secondary node change request message sent by the source secondary node.

4. The method according to any one of claims 1 to 3, wherein the CPAC configuration set comprises a second CPAC configuration, the second CPAC configuration is obtained by the master node from a second message from the source secondary node, the second message is a response message sent by the source secondary node based on a secondary node modification request of the master node before the master node sends an RRC configuration to the terminal device, and the RRC configuration indicates a CPAC configuration of the terminal device.

5. The method according to any one of claims 1 to 4, wherein the CPAC configuration set comprises a third CPAC configuration, the third CPAC configuration is obtained by the master node from a third message from the source secondary node, the third message is a CPAC configuration change request message initiated by the source secondary node after the master node sends the RRC configuration to the terminal device, and the RRC configuration indicates the CPAC configuration of the terminal device.

6. The method according to claim 2, wherein the SCG failure information comprises first time information and/or second time information;
the first time information indicates a time period from a time at which the terminal device receives a primary secondary cell addition/change PA/PC command to a time at which the terminal device detects the SCG failure; and
the second time information indicates a time period from a time at which the terminal device receives a conditional primary secondary cell addition/change CPAC command to the time at which the terminal device detects the SCG failure.

7. The method according to claim 6, wherein the method further comprises:
sending, by the master node, the first time information and/or the second time information to the secondary node.

8. An information transmission method, wherein the method comprises:
receiving, by a secondary node, a conditional primary secondary cell addition/change CPAC configuration set from a master node, wherein the CPAC configuration set comprises one or more CPAC configurations associated with a secondary cell group SCG failure; and
adjusting, by the secondary node, a mobility parameter based on the CPAC configuration set.

9. The method according to claim 8, wherein the method further comprises:
receiving, by the secondary node, first time information and/or second time information from the master node, wherein the first time information indicates a time period from a time at which a terminal device receives a primary secondary cell addition/change PAC command to a time at which the terminal device detects the SCG failure, and the second time information indicates a time period from a time at which the terminal device receives a conditional primary secondary cell addition/change CPAC command to the time at which the terminal device detects the SCG failure; and
the adjusting, by the secondary node, a mobility parameter based on the CPAC configuration set comprises:
adjusting, by the secondary node, the mobility parameter based on the CPAC configuration set and the first time information and/or the second time information.

10. The method according to any one of claims 1 to 6 and 8, wherein the SCG failure is an SCG failure that occurs after the terminal device successfully executes a CPAC procedure and releases the CPAC configuration.

11. An information transmission method, wherein the method comprises:
determining, by a terminal device, that a secondary cell group SCG failure occurs; and
sending, by the terminal device, SCG failure information to a master node, wherein the SCG failure information comprises first time information and/or second time information, the first time information indicates a time period from a time at which the UE receives a primary secondary cell addition/change PA/PC command to a time at which the UE detects the SCG failure, and the second time information indicates a time period from a time at which the terminal device receives a conditional primary secondary cell addition/change CPAC command to the time at which the terminal device detects the SCG failure, wherein
the SCG failure information is used to adjust a mobility parameter.

12. The method according to claim 11, wherein the SCG failure information further comprises a conditional primary secondary cell addition/change CPAC configuration set, and the CPAC configuration set comprises one or more CPAC configurations associated with the SCG failure.

13. The method according to any one of claims 6 to 9, 11, and 12, wherein the SCG failure is an SCG failure that occurs before a CPAC is configured and execution of the CPAC is triggered after the UE successfully executes a PA/PC procedure; or
the SCG failure is an SCG failure that occurs after execution of a PA/PC procedure is configured and the execution of the PA/PC fails or succeeds before a CPAC is configured and execution of the CPAC is triggered.

14. An information transmission apparatus, comprising a unit configured to perform the method according to any one of claims 1 to 7, or comprising a unit configured to perform the method according to any one of claims 8 to 10, or comprising a unit configured to perform the method according to any one of claims 11 to 13.

15. An information transmission apparatus, comprising a processor, a memory, and a transceiver, wherein the transceiver is configured to: receive information from a communication apparatus other than the information transmission apparatus, and output information to the communication apparatus other than the information transmission apparatus; and the processor invokes a computer program stored in the memory, so that the information transmission apparatus implements the method according to any one of claims 1 to 7; or
the processor invokes a computer program stored in the memory, so that the information transmission apparatus implements the method according to any one of claims 8 to 10; or
the processor invokes a computer program stored in the memory, so that the information transmission apparatus implements the method according to any one of claims 11 to 13.

16. A communication system, wherein the communication system comprises a master node, a secondary node, and a terminal device, wherein the master node is configured to perform the method according to any one of claims 1 to 7, the secondary node is configured to perform the method according to any one of claims 8 to 10, and the terminal device is configured to perform the method according to any one of claims 11 to 13.

17. A computer-readable storage medium, wherein the computer-readable storage medium stores a computer program or computer instructions, and when the computer program or the computer instructions are run by a processor, the method according to any one of claims 1 to 13 is implemented.

18. A computer program product, wherein the computer program product comprises computer program code, and when the computer program code is run by a processor, the method according to any one of claims 1 to 13 is implemented.
